# EUROPÄISCHE PATENTSCHRIFT

(11) **EP 0 802 940 B1**
(45) Veröffentlichungstag und Bekanntmachung des Hinweises auf die Patenterteilung: **22.07.1998**
(21) Anmeldenummer: 96900307.8
(22) Anmeldetag: 09.01.1996
(51) Int. Cl.: C08G 69/44, C08G 69/48, C08G 69/40, A61L 15/26, A61L 15/62, C09J 177/12

(54) **BIOLOGISCH ABBAUBARE POLYMERE, VERFAHREN ZU DEREN HERSTELLUNG SOWIE DEREN VERWENDUNG ZUR HERSTELLUNG BIOABBAUBARER FORMKÖRPER**
BIOLOGICALLY DEGRADABLE POLYMERS, PROCESSES FOR MANUFACTURING THE SAME AND THE USE THEREOF FOR PRODUCING BIODEGRADABLE MOULDED ARTICLES
POLYMERES BIODEGRADABLES, LEUR PROCEDE DE FABRICATION ET LEUR UTILISATION POUR LA FABRICATION DE CORPS MOULES BIODEGRADABLES

(30) Priorität: 13.01.1995 DE 19500754
(43) Veröffentlichungstag der Anmeldung: 29.10.1997
(73) Patentinhaber: BASF AKTIENGESELLSCHAFT, 67056 Ludwigshafen (DE)
(72) Erfinder: WARZELHAN, Volker, D-67273 Weisenheim (DE); SCHORNICK, Gunnar, D-67271 Neuleiningen (DE); KRONER, Matthias, D-67304 Eisenberg (DE); SEELIGER, Ursula, D-67059 Ludwigshafen (DE); YAMAMOTO, Motonori, D-68199 Mannheim (DE); RAMLOW, Gerhard, D-69469 Weinheim (DE)
(86) Internationale Anmeldenummer: EP9600064
(87) Internationale Veröffentlichungsnummer: WO9621691

(56) Entgegenhaltungen:
- EP-A- 0 281 461
- PATENT ABSTRACTS OF JAPAN vol. 003 no. 142 (C-065) ,24.November 1979 & JP,A,54 120727 (AGENCY OF IND SCIENCE & TECHNOL) 19.September 1979,

## Beschreibung

Die vorliegende Erfindung betrifft biologisch abbaubare Polyetheresteramide Q1 mit einem Molekulargewicht (Mₙ) im Bereich von 6000 bis 80000 g/mol, einer Viskositätszahl im Bereich von 30 bis 450 g/ml (gemessen in o-Dichlorbenzol/Phenol (Gew.-Verhältnis 50/50) bei einer Konzentration von 0,5 Gew.-% Polyetheresteramid Q1 bei einer Temperatur von 25°C), und einen Schmelzpunkt im Bereich von 50 bis 200°C, erhältlich durch Reaktion einer Mischung bestehend im wesentlichen aus
(a1) von 95 bis 99,9 Gew.-% Polyetheresteramid P1 mit einem Molekulargewicht (Mₙ) im Bereich von 5000 bis 80000 g/mol, einer Viskositätszahl im Bereich von 30 bis 450 g/ml (gemessen in o-Dichlorbenzol/Phenol (Gew.-Verhältnis 50/50) bei einer Konzentration von 0,5 Gew.-% Polyetheresteramid P1 bei einer Temperatur von 25°C) und einen Schmelzpunkt im Bereich von 50 bis 200°C, erhältlich durch Reaktion einer Mischung, bestehend im wesentlichen aus
   (b1) einer Mischung, bestehend im wesentlichen aus
      (b11) 20 bis 95 mol-% Adipinsäure oder esterbildende Derivate davon oder Mischungen davon,
      (b12) 5 bis 80 mol-% Terephthalsäure oder esterbildende Derivate davon oder Mischungen davon, und
      (b13) 0 bis 5 mol-% einer sulfonatgruppenhaltigen Verbindung,
         wobei 0 bis 50 mol-% der Komponente (b11) durch mindestens eine andere aliphatische C₄-C₁₀- oder cycloaliphatische C₅-C₁₀-Dicarbonsäure oder Dimerfettsäure ersetzt sein kann und wobei 0 bis 50 mol-% der Komponente (b12) durch eine andere aromatische Dicarbonsäure ersetzt sein kann, wobei die Summe der einzelnen Molprozentangaben 100 mol-% beträgt, und
   (b2) einer Mischung aus Dihydroxyverbindungen, bestehend im wesentlichen aus
      (b21) von 15 bis 99,3 mol-% einer Dihydroxyverbindung, ausgewählt aus der Gruppe bestehend aus C₂-C₆-Alkandiolen und C₅-C₁₀-Cycloalkandiolen,
      (b22) von 0,2 bis 85 mol-% einer Etherfunktionen-enthaltenden Dihydroxyverbindung gemäß Formel I

         HO-[(CH₂)ₙ-O]ₘ-H I

         in der n für 2, 3 oder 4 und m für eine ganze Zahl von 2 bis 250 stehen, oder Mischungen davon,
      (b23) von 0,5 bis 80 mol-% eines Amino-C₂-C₁₂-alkanols oder eines Amino-C₅-C₁₀-cycloalkanols, und
      (b24) von 0 bis 50 mol-% eines Diamino-C₁-C₈-Alkans,
      (b25) von 0 bis 50 mol-% eines 2,2'-Bisoxazolins der allgemeinen Formel II 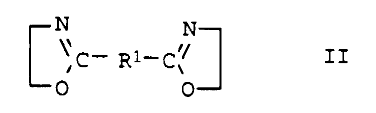 wobei R¹ eine Einfachbindung, eine (CH₂)_{q}-Alkylengruppe, mit q = 2, 3 oder 4, oder eine Phenylengruppe bedeutet, wobei die Summe der einzelnen Molprozentangaben 100 mol-% beträgt,
      wobei man das Molverhältnis von (b1) zu (b2) im Bereich von 0,4:1 bis 1,5:1 wählt,
(a2) von 0,1 bis 5 Gew.-% eines Divinylethers C1 und
(a3) von 0 bis 5 mol-%, bezogen auf Komponente (b1) aus der Herstellung von P1, Verbindung D.

Des weiteren betrifft die Erfindung Polymere und biologisch abbaubare thermoplastische Formmassen gemäß Unteransprüche, Verfahren zu deren Herstellung, deren Verwendung zur Herstellung biologisch abbaubarer Formkörper sowie Klebstoffe, biologisch abbaubare Formkörper, Schäume und Blends mit Stärke, erhältlich aus den erfindungsgemäßen Polymeren bzw. Formmassen.

Polymere, die biologisch abbaubar sind, d.h. die unter Umwelteinflüssen in einer angemessenen und nachweisbaren Zeitspanne zerfallen, sind seit einiger Zeit bekannt. Der Abbau erfolgt dabei in der Regel hydrolytisch und/oder oxidativ, zum überwiegenden Teil jedoch durch die Einwirkung von Mikroorganisman wie Bakterien, Hefen, Pilzen und Algen. Y.Tokiwa und T. Suzuki (Nature, Bd. 270, S. 76-78, 1977) beschreiben den enzymatischen Abbau von aliphatischen Polyestern, beispielsweise auch Polyester auf der Basis von Bernsteinsäure und aliphatischer Diole.

In der EP-A 565,235 werden aliphatische Copolyester, enthaltend [-NH-C(O)O-]-Gruppen ("Urethan-Einheiten"), beschrieben. Die Copolyester der EP-A 565,235 werden durch Umsetzung eines Präpolyesters - erhalten durch Umsetzung von im wesentlichen Bernsteinsäure und eines aliphatischen Diols - mit einem Diisocyanat, bevorzugt Hexamethylendiisocyanat, erhalten. Die Umsetzung mit dem Diisocyanat ist gemäß der EP-A 565,235 erforderlich, da durch die Polykondensation alleine nur Polymere mit solchen Molekulargewichten erhalten werden, die keine befriedigenden mechanischen Eigenschaften aufweisen. Von entscheidendem Nachteil ist die Verwendung von Bernsteinsäure oder deren Esterderivate zur Herstellung der Copolyester, weil Bernsteinsäure bzw. deren Derivate teuer und in nicht genügender Menge auf dem Markt verfügbar sind. Außerdem werden bei Verwendung von Bernsteinsäure als einziger Säurekomponente die daraus hergestellten Polyester nur extrem langsam abgebaut.

Eine Kettenverlängerung kann nach der EP-A 534,295 vorteilhaft auch durch Umsetzung mit Divinylethern erzielt werden.

Aus der WO 92/13020 sind Copolyetherester auf Basis überwiegend aromatischer Dicarbonsäuren, kurzkettiger Etherdiol-Segmenten wie Diethylenglykol, langkettiger Polyalkylenglykole wie Polyethylenglykol (PEG) und aliphatischer Diole bekannt, wobei mindestens 85 mol-% des Polyesterdiolrestes aus einem Terephthalsäurerest bestehen. Durch Modifikationen wie den Einbau von bis zu 2,5 Mol-% Metallsalze der 5-Sulfoisophthalsäure kann die Hydrophilie des Copolyesters gesteigert und die Kristallinität vermindert werden. Hierdurch soll gemäß der WO 92/13020 ein biologischer Abbau der Copolyester ermöglicht werden. Nachteilig an diesen Copolyestern ist jedoch, daß ein biologischer Abbau durch Mikroorganismen nicht nachgewiesen wurde, sondern lediglich das Verhalten gegenüber Hydrolyse in kochendem Wasser durchgeführt wurde.

Nach Angaben von Y.Tokiwa und T.Suzuki (Nature, Bd. 270, 1977 oder J. of Appl. Polymer Science, Bd. 26, S. 441-448, 1981) ist davon auszugehen, daß Polyester, die weitgehend aus aromatischen Dicarbonsäure-Einheiten und aliphatischen Diolen aufgebaut sind, wie PET (Polyethylenterephthalat) und PBT (Polybutylenterephthalat), enzymatisch nicht abbaubar sind. Dies gilt auch für Copolyester und Copolyetherester, die Blöcke, aufgebaut aus aromatischen Dicarbonsäureeinheiten und aliphatischen Diolen bzw. Etherdiolen, enthalten.

Weiterhin wurden von Y.Tokiwa, T.Suzuki und T.Ando (J. of Appl. Polym. Sci. Vol. 24, S. 1701 - 1711 (1979), John Wiley & Sons) Polyesteramide sowie Blends aus Polycaprolacton und verschiedenen aliphatischen Polyamiden wie Polyamid-6, Polyamid-66, Polyamid-11, Polyamid-12 und Polyamid-69 durch Schmelzkondensation hergestellt und auf ihre biologische Abbaubarkeit durch Lipasen untersucht. Es wurde gefunden, daß die biologische Abbaubarkeit solcher Polyesteramide stark davon abhängt, ob eine überwiegend statistische Verteilung der Amidsegmente vorliegt oder etwa eine Blockstruktur. Allgemein bewirken Amidsegmente eher eine Verlangsamung des biologischen Abbaus durch Lipasen.

Entscheidend ist allerdings, daß keine längeren Amidblöcke vorliegen, da aus Plant. Cell Physiol., Vol. 7, S. 93 (1966), J. Biochem., Vol. 59 S. 537 (1966) sowie Agric. Biol. Chem., Vol. 39, S. 1219 (1975) bekannt ist, daß die üblichen aliphatischen und aromatischen Polyamide biologisch nicht abbaubar sind, sondern allenfalls deren Oligomere.

Witt et al. (Handout zu einem Poster auf dem International Workshop des Royal Institute of Technology, Stockholm, Schweden, vom 21.bis 23.04.94) beschreiben biologisch abbaubare Copolyester auf der Basis von 1,3-Propandiol, Terephthalsäureester und Adipin- oder Sebazinsäure. Nachteilig an diesen Copolyestern ist, daß daraus hergestellte Formkörper, insbesondere Folien, unzureichende mechanische Eigenschaften aufweisen.

Aufgabe der vorliegenden Erfindung war es daher, biologisch, d.h. durch Mikroorganismen, abbaubare Polymere bereitzustellen, die diese Nachteile nicht aufweisen. Insbesondere sollten die erfindungsgemäßen Polymere aus bekannten und preiswerten Monomerbausteinen herstellbar und wasserunlöslich sein. Des weiteren sollte es möglich sein, durch spezifische Modifikationen wie Kettenverlängerung, Einbau von hydrophilen Gruppen und verzweigend wirkenden Gruppen, maßgeschneiderte Produkte für die gewünschten erfindungsgemäßen Anwendungen zu erhalten. Dabei sollte der biologische Abbau durch Mikroorganismen nicht auf Kosten der mechanischen Eigenschaften erreicht werden, um die Zahl der Anwendungsgebiete nicht einzuschränken.

Demgemäß wurden die eingangs definierten Polymere und thermoplastischen Formmassen gefunden.

Des weiteren wurden Verfahren zu deren Herstellung, deren Verwendung zur Herstellung biologisch abbaubarer Formkörper und Klebstoffe sowie biologisch abbaubare Formkörper, Schäume, Blends mit Stärke und Klebstoffe, erhältlich aus den erfindungsgemäßen Polymeren und Formmassen, gefunden.

Die erfindungsgemäßen biologisch abbaubaren Polyetheresteramide Q1 sind charakterisiert durch ein Molekulargewicht (Mₙ) im Bereich von 6000 bis 80000, vorzugsweise von 8000 bis 50000, besonders bevorzugt von 10000 bis 40000 g/mol, durch eine Viskositätszahl im Bereich von 30 bis 450, vorzugsweise von 50 bis 400 g/ml (gemessen in o-Dichlorbenzol/Phenol (Gew.-Verhältnis 50/50) bei einer Konzentration von 0,5 Gew.-% Polyetheresteramid Q1 bei einer Temperatur von 25°C), und einen Schmelzpunkt im Bereich von 50 bis 200°C, vorzugsweise von 60 bis 180°C.

Die Polyetheresteramide Q1 erhält man erfindungsgemäß, indem man eine Mischung zur Reaktion bringt, bestehend im wesentlichen aus
(a1) von 95 bis 99,9, vorzugsweise von 96 bis 99,8, besonders bevorzugt von 97 bis 99,65 Gew.-% Polyetheresteramid P1,
(a2) von 0,1 bis 5, vorzugsweise von 0,2 bis 4, besonders bevorzugt von 0,35 bis 3 Gew.-% eines Divinylethers C1 und
(a3) von 0 bis 5, vorzugsweise von 0 bis 4 mol-%, bezogen auf Komponente (b1) aus der Herstellung von P1, Verbindung D.

Bevorzugte Polyetheresteramide P1 sind charakterisiert durch ein Molekulargewicht (Mₙ) im Bereich von 5000 bis 80000, vorzugsweise von 6000 bis 45000, besonders bevorzugt von 8000 bis 35000 g/mol, eine Viskositätszahl im Bereich von 30 bis 450, vorzugsweise von 50 bis 400 g/ml (gemessen in o-Dichlorbenzol/Phenol (Gew.-Verhältnis 50/50) bei einer Konzentration von 0,5 Gew.-% Polyetheresteramid P1 bei einer Temperatur von 25°C) und einen Schmelzpunkt im Bereich von 50 bis 200, vorzugsweise von 60 bis 180°C. Die Polyetheresteramide P1 erhält man in der Regel, indem man eine Mischung, bestehend im wesentlichen aus
(b1) einer Mischung, bestehend im wesentlichen aus
   - 20 bis 95,: vorzugsweise von 30 bis 80, besonders bevorzugt von 40 bis 70 mol-% Adipinsäure oder esterbildende Derivate davon oder Mischungen davon,
   - 5 bis 80,: vorzugsweise von 20 bis 70, besonders bevorzugt von 30 bis 60 mol-% Terephthalsäure oder esterbildende Derivate davon oder Mischungen davon,
   und
   - 0 bis 5,: vorzugsweise von 0 bis 3, besonders bevorzugt von 0,1 bis 2 mol-% einer sulfonatgruppenhaltigen Verbindung, wobei die Summe der einzelnen Molprozentangaben 100 mol-% beträgt, und
(b2) einer Mischung aus Dihydroxyverbindungen, bestehend im wesentlichen aus
   (b21) von 15 bis 99,3, vorzugsweise von 60 bis 99, besonders bevorzugt von 70 bis 97,5 mol-% einer Dihydroxyverbindung, ausgewählt aus der Gruppe bestehend aus C₂-C₆-Alkandiolen und C₅-C₁₀-Cycloalkandiolen,
   (b22) von 0,2 bis 85, vorzugsweise von 0,5 bis 40, besonders bevorzugt von 0,5 bis 30 mol-% einer Etherfunktionen enthaltenden Dihydroxyverbindung gemäß Formel I

      HO-[(CH₂)ₙ-O]ₘ-H I

      in der n für 2, 3 oder 4, vorzugsweise zwei oder drei, besonders bevorzugt zwei, und m für eine ganze Zahl von 2 bis 250, vorzugsweise von zwei bis 100 stehen, oder Mischungen davon,
   (b23) von 0,5 bis 80, vorzugsweise von 0,5 bis 50, besonders bevorzugt von 1 bis 30 mol-% eines Amino-C₂-C₁₂-alkanols oder eines Amino-C₅-C₁₀-cycloalkanols, und
   (b24) von 0 bis 50, vorzugsweise von 0 bis 35, besonders bevorzugt von 0,5 bis 30 mol-% eines Diamino-C₁-C₈-Alkans,
   (b25) von 0 bis 50, vorzugsweise von 0 bis 30, besonders bevorzugt von 0,5 bis 20 mol-% eines 2,2'-Bisoxazolins der allgemeinen Formel II 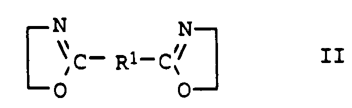 wobei R¹ eine Einfachbindung, eine (CH₂)_{q}-Alkylengruppe, mit q = 2, 3 oder 4, oder eine Phenylengruppe bedeutet, wobei die Summe der einzelnen Molprozentangaben 100 mol-% beträgt,
   wobei man das Molverhältnis von (b1) zu (b2) im Bereich von 0,4:1 bis 1,5:1, vorzugsweise von 0,6:1 bis 1,25:1 wählt, zur Reaktion bringt.

Als sulfonatgruppenhaltige Verbindung setzt man üblicherweise ein Alkali- oder Erdalkalimetallsalz einer sulfonatgruppenhaltigen Dicarbonsäure oder deren esterbildende Derivate ein, bevorzugt Alkalimetallsalze der 5-Sulphoisophthalsäure oder deren Mischungen, besonders bevorzugt das Natriumsalz.

Als Dihydroxyverbindungen (b21) setzt man erfindungsgemäß eine Verbindung, ausgewählt aus der Gruppe bestehend aus C₂-C₆-Alkandiolen und C₅-C₁₀-Cycloalkandiolen, ein wie Ethylenglykol, 1,2-, 1,3-Propandiol, 1,2-, 1,4-Butandiol, 1,5-Pentandiol oder 1,6-Hexandiol, insbesondere Ethylenglykol, 1,3-Propandiol und 1,4-Butandiol, Cyclopentandiol, Cyclohexandiol, 1,2-Cyclohexandimethanol, 1,4-Cyclohexandimethanol, besonders bevorzugt Ethylenglykol und 1,4-Butandiol, sowie Mischungen daraus, ein.

Als Dihydroxyverbindungen (b22) setzt man bevorzugt Diethylenglykol, Triethylenglykol, Polyethylenglykol, Polypropylenglykol und Polytetrahydrofuran (Poly-THF) ein, wobei man auch Mischungen davon oder Verbindungen einsetzen kann, die unterschiedliche n's aufweisen (siehe Formel I), beispielsweise Polyethylenglykol, das Propyleneinheiten (n = 3) enthält, beispielsweise erhältlich durch Polymerisation nach an sich bekannten Methoden von zuerst Ethylenoxid und anschließend mit Propylenoxid. Das Molekulargewicht (Mₙ) wählt man in der Regel im Bereich von 250 bis 8000, bevorzugt von 600 bis 3000 g/mol.

Als Amino-C₂-C₁₂-alkanol oder Amino-C₅-C₁₀-cyloalkanol (Komponente (b23), wobei hierunter auch 4-Aminomethylcyclohexanmethanol fallen soll, setzt man bevorzugt Amino-C₂-C₆-alkanole wie 2-Aminoethanol, 3-Aminopropanol, 4-Aminobutanol, 5-Aminopentanol, 6-Aminohexanol sowie Amino-C₅-C₆-cyloalkanole wie Aminocyclopentanol und Aminocyclohexanol oder Mischungen davon ein.

Als Diamino-C₁-C₈-alkan (b24) setzt man bevorzugt Diamino-C₄-C₆-alkane ein wie 1,4-Diminobutan, 1,5-Diaminopentan und 1,6-Diaminohexan (Hexamethylendiamin, "HMD").

Die Verbindungen der allgemeinen Formel II (Komponente b25) sind in der Regel erhältlich durch das Verfahren aus Angew. Chem. int. Edit., Vol. 11 (1972), S. 287-288.

Erfindungsgemäß verwendet man von 0 bis 5, vorzugsweise von 0,01 bis 4 mol-%, besonders bevorzugt von 0,05 bis 4 mol-%, bezogen auf die Komponente (b1), mindestens eine Verbindung D mit mindestens drei zur Esterbildung befähigten Gruppen.

Die Verbindungen D enthalten bevorzugt drei bis zehn funktionelle Gruppen, welche zur Ausbildung von Esterbindungen fähig sind. Besonders bevorzugte Verbindungen D haben drei bis sechs funktionelle Gruppen dieser Art im Molekül, insbesondere drei bis sechs Hydroxylgruppen und/oder Carboxylgruppen. Beispielhaft seien genannt:
Weinsäure, Citronensäure, Äpfelsäure;
Trimethylolpropan, Trimethylolethan;
Pentaerythrit;
Polyethertriole;
Glycerin;
Trimesinsäure;
Trimellitsäure, -anhydrid;
Pyromellitsäure, -dianhydrid und
Hydroxyisophthalsäure.

Beim Einsatz von Verbindungen D, die einen Siedepunkt unterhalb von 200°C aufweisen, kann bei der Herstellung der Polymester P1 ein Anteil vor der Reaktion aus dem Polykondensationsgemisch abdestillieren. Es ist daher bevorzugt, diese Verbindungen in einer frühen Verfahrensstufe wie der Umesterungs- bzw. Veresterungsstufe zuzusetzen, um diese Komplikation zu vermeiden und um die größtmögliche Regelmäßigkeit ihrer Verteilung innerhalb des Polykondensats zu erzielen.

Im Falle höher als 200°C siedender Verbindungen D können diese auch in einer späteren Verfahrensstufe eingesetzt werden.

Durch Zusatz der Verbindung D kann beispielsweise die Schmelzviskositat in gewünschter Weise verändert, die Schlagzähigkeit erhöht und die Kristallinität der erfindungsgemäßen Polymere bzw. Formmassen herabgesetzt werden.

Die Herstellung der biologisch abbaubaren Polyetheresteramide P1 ist grundsätzlich bekannt (Sorensen und Campbell, "Preparative Methods of Polymer Chemistry", Interscience Publishers, Inc., New York, 1961, Seiten 111 bis 127; Encyl. of Polym. Science and Eng., Bd. 12, 2. Ed., John Wiley & Sons, 1988, S. 1 bis 75, insbesondere S. 59 und 60; Kunststoff-Handbuch, Band 3/1, Carl Hanser Verlag, München, 1992, S. 15 bis 23 (Herstellung von Polyesteramiden); WO 92/13019; EP-A 568,593; EP-A 565,235; EP-A 28,687 (Herstellung von Polyestern); GB-PS 818,157; GB-PS 1,010,916; GB-PS 1,115,512), so daß sich nähere Angaben hierüber erübrigen.

So kann man beispielsweise die Umsetzung von Dimethylestern der Komponente (b1) mit der Komponente (b2) bei Temperaturen im Bereich von 160 bis 230°C in der Schmelze bei Atmosphärendruck vorteilhaft unter Inertgasatmosphäre durchführen.

In einer bevorzugten Ausführungsform wird zunächst die gewünschte Aminohydroxyverbindung (b23) mit der Komponente (b1), bevorzugt Terephthalsäure, Dimethylester der Terephthalsäure, Adipinsäure, Di-C₂-C₆-alkylester der Adipinsäure, Bernsteinsäureanhydrid, Phthalsäureanhydrid, in einem molaren Verhältnis von 2:1 umgesetzt.

In einer weiteren bevorzugten Ausführungsform wird die gewünschte Diaminverbindung (b24) mit der Komponente (b1), bevorzugt Terephthalsäure, Dimethylester der Terephthalsäure, Adipinsäure, Di-C₂-C₆-alkylester der Adipinsäure, Bernsteinsäureanhydrid, Phthalsäureanhydrid, in einem molaren Verhältnis von mindestens 0,5:1, bevorzugt 0,5:1, umgesetzt.

In einer weiteren bevorzugten Ausführungsform wird das gewünschte Bisoxazolin (b25) mit der Komponente (b1), bevorzugt Terephthalsäure, Dimethylester der Terephthalsäure, Adipinsäure, Di-C₂-C₄-alkylester der Adipinsäure, Bernsteinsäureanhydrid, Phthalsäureanhydrid, in einem molaren Verhältnis von mindestens 0,5:1, bevorzugt 0,5:1, umgesetzt.

Vorteilhaft wird bei der Herstellung des biologisch abbaubaren Polyetheresteramids P1 ein molarer Überschuß der Komponente (b2), bezogen auf die Komponente (b1), verwendet, beispielsweise bis zum 2 1/2fachen, bevorzugt bis zum 1,67fachen.

Üblicherweise erfolgt die Herstellung des biologisch abbaubaren Polyetheresteramids P1 unter Zugabe von geeigneten, an sich bekannten Katalysatoren (Encyl.of Polym. Science and Eng., Bd. 12, 2nd Ed., John Wiley&Sons, 1988, S. 1 bis 75, insbesondere S. 59 bis 60; GB-PS 818,157; GB-PS 1,010,916; GB-PS 1,115,512) beispielsweise Metallverbindungen auf der Basis folgender Elemente wie Ti, Ge, Zn, Fe, Mn, Co, Zr, V, Ir, La, Ce, Li, und Ca, bevorzugt metallorganische Verbindungen auf der Basis dieser Metalle wie Salze organischer Säuren, Alkoxide, Acetylacetonate und ähnliches, insbesondere bevorzugt auf Basis von Lithium, Zink, Zinn und Titan.

Bei Verwendung von Dicarbonsäuren oder deren Anhydride als Komponente (b1) kann deren Veresterung mit Komponente (b2) vor, gleichzeitig oder nach der Umesterung stattfinden. Beispielsweise kann das in der DE-A 23 26 026 beschriebene Verfahren zur Herstellung modifizierter Polyalkylenterephthalate verwendet werden.

Nach der Umsetzung der Komponenten (b1) und (b2) wird in der Regel unter vermindertem Druck oder in einem Inertgasstrom, beispielsweise aus Stickstoff, bei weiterem Erhitzen auf eine Temperatur im Bereich von 180 bis 260°C die Polykondensation bis zum gewünschten Molekulargewicht durchgeführt.

Um unerwünschte Abbau- und/oder Nebenreaktionen zu vermeiden, kann man in dieser Verfahrensstufe gewünschtenfalls auch Stabilisatoren (siehe EP-A 21042 und US-A 4,321,341) zusetzen. Solche Stabilisatoren sind beispielsweise die in der EP-A 13 461, US 4,328,049 oder in B. Fortunato et al., Polymer Vol. 35, Nr. 18, S. 4006 bis 4010, 1994, Butterworth-Heinemann Ltd., beschriebene Phosphor-Verbindungen. Diese können zum Teil auch als Deaktivatoren der oben beschriebenen Katalysatoren wirken. Beispielhaft seien genannt: Organophosphite, phosphonige Säure und phosphorige Säure. Als Verbindungen, die nur als Stabilisatoren wirken seien beispielhaft genannt: Trialkylphosphite, Triphenylphosphit, Trialkylphosphate, Triphenylphosphat und Tocopherol (beispielsweise als Uvinul® 2003AO (BASF) erhältlich).

Bei der Verwendung der erfindungsgemäßen biologisch abbaubaren Copolymere, beispielsweise im Verpackungsbereich z.B. für Nahrungsmittel, ist es in der Regel wünschenswert, den Gehalt an eingesetztem Katalysator so gering als möglich zu wählen sowie keine toxischen Verbindungen einzusetzen. Im Gegensatz zu anderen Schwermetallen wie Blei, Zinn, Antimon, Cadmium, Chrom etc. sind Titan- und Zinkverbindungen in der Regel nicht toxisch ("Sax Toxic Substance Data Book", Shizuo Fujiyama, Maruzen, K.K., 360 S. (zitiert in EP-A 565,235), siehe auch Römpp Chemie Lexikon Bd. 6, Thieme Verlag, Stuttgart, New York, 9. Auflage, 1992, S. 4626 bis 4633 und 5136 bis 5143). Beispielhaft seien genannt: Dibutoxydiacetoacetoxytitan, Tetrabutylorthotitanat und Zink(II)-acetat.

Das Gewichtsverhältnis von Katalysator zu Polyetheresteramid P1 liegt üblicherweise im Bereich von 0,01:100 bis 3:100, vorzugsweise von 0,05:100 bis 2:100, wobei bei hochaktiven Titanverbindungen auch kleinere Mengen eingesetzt werden können wie 0,0001:100.

Der Katalysator kann gleich zu Beginn der Reaktion, unmittelbar kurz vor der Abtrennung des überschüssigen Diols oder gewünschtenfalls auch in mehreren Portionen verteilt während der Herstellung der biologisch abbaubaren Polyetheresteramide Pl eingesetzt werden. Gewünschtenfalls können auch verschiedene Katalysatoren oder auch Gemische davon eingesetzt werden.

Als Divinylether C1 kann man nach bisherigen Beobachtungen alle üblichen und kommerziell erhältlichen Divinylether einsetzen. Bevorzugt setzt man Divinylether ein, die ausgewählt sind aus der Gruppe, bestehend aus 1,4-Butandiol-Divinylether, 1,6-Hexandiol-Divinylether, 1,4-Cyclohexandimethanol-Divinylether.

Die bevorzugt kationisch katalysierte Umsetzung der Polyetheresteramid P1 mit dem Divinylether C1 erfolgt vorzugsweise in der Schmelze, wobei darauf zu achten ist, daß möglichst keine Nebenreaktionen auftreten, die zu einer Vernetzung oder Gelbildung führen können.

In einer besonderen Ausführungsform führt man die Reaktion üblicherweise bei Temperaturen im Bereich von 90 bis 230, vorzugsweise von 100 bis 200°C durch, wobei die Zugabe des Divinylethers vorteilhaft in mehreren Portionen oder kontinuierlich erfolgt.

Gewünschtenfalls kann man die Umsetzung der Polyetheresteramide P1 mit dem Divinylether C1 auch in Gegenwart von gängigen inerten Lösemitteln wie Toluol, Methylethylketon, Tetrahydrofuran ("THF") oder Essigsäureethylester oder deren Mischungen durchführen, wobei man die Reaktionstemperatur in der Regel im Bereich von 80 bis 200, vorzugsweise von 90 bis 150°C wählt.

Die Umsetzung mit dem Divinylether Cl kann diskontinuierlich oder kontinuierlich beispielsweise in Rührkesseln, Reaktionsextrudern oder über Mischköpfe durchgeführt werden.

Man kann bei der Umsetzung der Polyetheresteramide P1 mit den Divinylethern C1 auch gängige Katalysatoren einsetzen, die aus dem Stand der Technik bekannt sind (beispielsweise die in der EP-A 534,295 beschriebenen) oder die bei der Herstellung der Polyetheresteramide P1 und Q2 einsetzbar sind bzw. eingesetzt wurden und, falls man bei der Herstellung der Polyetheresteramide Q1 so verfährt, daß man die Polyetheresteramide P1 nicht isoliert, nun weiterbenutzt werden können. Beispielhaft seien genannt: organische Carbonsäuren wie Oxalsäure, Weinsäure und Zitronensäure, wobei bevorzugt darauf zu achten ist, daß möglichst keine toxischen Verbindungen eingesetzt werden.

Obwohl das theoretische Optimum für die Reaktion von P1 mit Divinylethern C1 bei einem Molverhältnis der Vinylether-Funktion zu P1-Endgruppe (bevorzugt sind Polyetheresteramide P1 mit überwiegend Hydroxy-Endgruppen) von 1:1 liegt, kann die Umsetzung ohne technische Probleme auch bei Molverhältnissen von 1:3 bis 1,5:1 durchgeführt werden. Bei Molverhältnissen von >1:1 kann gewünschtenfalls während der Umsetzung oder auch nach der Umsetzung die Zugabe eines Kettenverlängerungsmittels, ausgewählt aus den Komponenten (b2), bevorzugt ein C₂-C₆-Diol, erfolgen.

Die erfindungsgemaßen biologisch abbaubaren Polymere T1 sind charakterisiert durch ein Molekulargewicht (Mₙ) im Bereich von 8000 bis 80000, vorzugsweise von 8000 bis 50000, besonders bevorzugt von 10000 bis 40000 g/mol, mit einer Viskositätszahl im Bereich von 30 bis 450, vorzugsweise von 50 bis 400 g/ml (gemessen in o-Dichlorbenzol/Phenol (Gew.-Verhältnis 50/50) bei einer Konzentration von 0,5 Gew.-% Polymer T1 bei einer Temperatur von 25 °C) und einem Schmelzpunkt im Bereich von 50 bis 255, vorzugsweise von 60 bis 255°C.

Die biologisch abbaubaren Polymere T1 erhält man erfindungsgemäß, indem man ein Polyetheresteramid Q2 mit
(d1) 0,1 bis 5, vorzugsweise von 0,2 bis 4, besonders bevorzugt von 0,3 bis 3 Gew.-%, bezogen auf das Polyetheresteramid Q2, Divinylether C1 sowie mit
(d2) 0 bis 5, vorzugsweise von 0 bis 4 mol-%, bezogen auf Komponente (b1) aus der Herstellung von Polyetheresteramid Q2 über Polyetheresteramid P1, Verbindung D zur Reaktion bringt.

Auf diese Weise wird üblicherweise eine Kettenverlängerung erreicht, wobei die erhaltenen Polymerketten vorzugsweise eine Blockstruktur aufweisen.

Bevorzugte biologisch abbaubare Polyetheresteramide Q2 sind charakterisiert durch ein Molekulargewicht (Mₙ) im Bereich von 5000 bis 80000, vorzugsweise von 6000 bis 50000, besonders bevorzugt von 8000 bis 40000, durch eine Viskositätszahl im Bereich von 30 bis 450, vorzugsweise von 50 bis 400 g/ml (gemessen in o-Dichlorbenzol/Phenol (Gew.-Verhältnis 50/50) bei einer Konzentration von 0,5 Gew.-% Polyetheresteramid Q2 bei einer Temperatur von 25°C), und einem Schmelzpunkt im Bereich von 50 bis 255, vorzugsweise von 60 bis 255°C.

Die Polyetheresteramide Q2 erhält man im allgemeinen, indem man eine Mischung zur Reaktion bringt, bestehend im wesentlichen aus
(c1) Polyetheresteramid P1,
(c2) 0,01 bis 50, vorzugsweise von 0,1 bis 40 Gew.-%, bezogen auf (c1), Aminocarbonsäure B1,
   wobei die Aminocarbonsäure B1 ausgewählt ist aus der Gruppe bestehend aus den natürlichen Aminosäuren, Polyamiden mit einem Molekulargewicht von höchstens 18 000 g/mol, bevorzugt höchstens 15 000 g/mol und Verbindungen, die definiert sind durch die Formeln IIIa oder IIIb

   HO-[-C(O)-G-N(H)-]ₚH IIIa

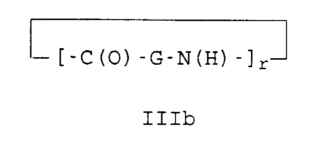

   in der p eine ganze Zahl von 1 bis 1500, vorzugsweise von 1 bis 1000 und r 1, 2, 3 oder 4, vorzugsweise 1 und 2, bedeuten, und G für einen Rest steht, der ausgewählt ist aus der Gruppe bestehend aus Phenylen, -(CH2)ₙ-, wobei n eine ganze Zahl von 1 bis 12, vorzugsweise 1, 5 oder 12, bedeutet, -C(R)²H- und -C(R²)HCH₂-, wobei R² für Methyl oder Ethyl steht, sowie Polyoxazoline der allgemeinen Formel IV 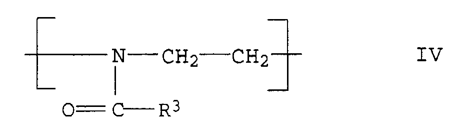 in der R³ für Wasserstoff, C₁-C₆-Alkyl, C₅-C₈-Cycloalkyl, unsubstituiertes oder mit C₁-C₄-Alkylgruppen bis zu dreifach substituiertes Phenyl oder für Tetrahydrofuryl steht,
   und
(c3) 0 bis 5, vorzugsweise von 0 bis 4 mol-%, bezogen auf Komponente (b1) aus der Herstellung von P1, Verbindung D.

Von den natürlichen Aminosäuren setzt man bevorzugt die folgenden ein: Glycin, Asparaginsäure, Glutaminsäure, Alanin, Valin, Leucin, Isoleucin, Tryptophan, Phenylalanin sowie daraus zugängliche Oligo- und Polymere wie Polyasparaginsäureimide und Polyglutaminsäureimide, besonders bevorzugt Glycin.

Als Polyamide setzt man solche ein, die erhältlich sind durch Polykondensation einer Dicarbonsäure mit 4 bis 6 C-Atomen und einem Diamin mit 4 bis 10 C-Atomen wie Tetramethylendiamin, Pentamethylendiamin, Hexamethylendiamin, Heptamethylendiamin, Octamethylendiamin, Nonamethylendiamin und Decamethylendiamin.

Bevorzugte Polyamide sind Polyamid-46, Polyamid-66 und Polyamid-610. Die Herstellung dieser Polyamide nimmt man im allgemeinen nach üblichen Methoden vor. Es versteht sich von selbst, daß diese Polyamide die üblichen Zusatz- und Hilfsstoffe enthalten können sowie daß diese Polyamide mit entsprechenden Reglern hergestellt werden können.

Die Herstellung der Polyoxazoline IV erfolgt in der Regel nach dem in der DE-A 1,206,585 beschriebenen Verfahren.

Als Verbindungen, die definiert sind durch die Formeln IIIa oder IIIb, sind besonders bevorzugt zu nennen: 6-Aminohexansäure, Caprolactam, Laurinlactam sowie deren Oligomere und Polymere mit einem Molekulargewicht von nicht größer als 18000 g/mol.

Die Umsetzung der Polyetherester P1 mit der Aminocarbonsäure B1 gewünschtenfalls in Gegenwart der Verbindung D erfolgt vorzugsweise in der Schmelze bei Temperaturen im Bereich von 120 bis 260°C unter Inertgasatmosphäre, gewünschtenfalls auch unter vermindertem Druck. Man kann sowohl diskontinuierlich als auch kontinuierlich, beispielsweise in Rührkesseln oder (Reaktions-)Extrudern, arbeiten.

Die Umsetzung kann gewünschtenfalls durch Zugabe an sich bekannter Umesterungskatalysatoren (siehe die weiter oben bei der Herstellung der Polyetheresteramide P1 beschriebenen) beschleunigt werden.

Bei Verwendung von Komponenten B1 mit höheren Molekulargewichten, beispielsweise mit einem p von größer als 10 (zehn), können durch Umsetzung mit den Polyetheresteramiden P1 in Rührkesseln oder Extrudern, die gewünschten Blockstrukturen durch die Wahl der Reaktionsbedingungen wie Temperatur, Verweilzeit, Zusatz von Umesterungskatalysatoren wie den oben genannten erhalten werden. So ist aus J. of Appl. Polym. Sci., Vol. 32, S. 6191 bis 6207, John Wiley & Sons, 1986 sowie aus Makromol. Chemie, Vol. 136, S. 311 bis 313, 1970 bekannt, daß bei der Umsetzung in der Schmelze aus einem Blend durch Umesterungsreaktionen zunächst Blockcopolymere und dann statistische Copolymere erhalten werden können.

Die Umsetzung erfolgt in der Regel analog zur Herstellung der Polyetheresteramide Q1.

Die erfindungsgemäßen biologisch abbaubaren Polymere T2 sind charakterisiert durch ein Molekulargewicht (Mₙ) im Bereich von 8000 bis 80000, vorzugsweise von 8000 bis 50000, besonders bevorzugt von 10000 bis 40000 g/mol, mit einer Viskositätszahl im Bereich von 30 bis 450, vorzugsweise von 50 bis 400 g/ml (gemessen in o-Dichlorbenzol/Phenol (Gew.-Verhältnis 50/50) bei einer Konzentration von 0,5 Gew.-% Polymer T2 bei einer Temperatur von 25 °C) und einem Schmelzpunkt im Bereich von 50 bis 255, vorzugsweise von 60 bis 255°C.

Die biologisch abbaubaren Polymere T2 erhält man erfindungsgemäß durch Umsetzung des Polyetheresteramids Q1 mit
(e1) 0,01 bis 50, vorzugsweise von 0,1 bis 40 Gew.-%, bezogen auf den Polyetheresteramid Q1, der Aminocarbonsäure B1 sowie mit
(e2) 0 bis 5, vorzugsweise von 0 bis 4 mol-%, bezogen auf Komponente (b1) aus der Herstellung von Polyetheresteramid Q1 über das Polyetheresteramid P1, Verbindung D,
wobei man zweckmäßig analog zur Umsetzung von Polyetheresteramid P1 mit Aminocarbonsäure B1 zu Polyetheresteramid Q2 verfährt.

Die erfindungsgemäßen biologisch abbaubaren Polymere T3 sind charakterisiert durch ein Molekulargewicht (Mₙ) im Bereich von 8000 bis 80000, vorzugsweise von 8000 bis 50000, besonders bevorzugt von 1000 bis 40000 g/mol, eine Viskositätszahl im Bereich von 30 bis 450, vorzugsweise von 50 bis 400 g/ml (gemessen in o-Dichlorbenzol/Phenol (Gew.-Verhältnis 50/50) bei einer Konzentration von 0,5 Gew.-% Polymer T3 bei einer Temperatur von 25°C) und einem Schmelzpunkt im Bereich von 50 bis 255, vorzugsweise von 60 bis 255°C.

Die biologisch abbaubaren Polymere T3 erhält man erfindungsgemäß, indem man (f1) Polyetheresteramid P2, oder (f2) einer Mischung bestehend im wesentlichen aus Polyetheresteramid P1 und 0,01 bis 50, vorzugsweise von 0,1 bis 40 Gew.-%, bezogen auf Polyetheresteramid P1, Aminocarbonsäure B1, oder (f3) einer Mischung, bestehend im wesentlichen aus Polyetheresteramiden P1, die eine unterschiedliche Zusammensetzung voneinander aufweisen, mit 0,1 bis 5, vorzugsweise von 0,2 bis 4, besonders bevorzugt von 0,3 bis 2,5 Gew.-%, bezogen auf die Menge der eingesetzten Polyetheresteramide, Divinylether C1 sowie mit 0 bis 5, vorzugsweise von 0 bis 4 mol-%, bezogen auf die jeweiligen Molmengen an Komponente (b1), die zur Herstellung der eingesetzten Polyetheresteramide (f1) bis (f3) eingesetzt wurden, Verbindung D, zur Reaktion bringt, wobei man die Umsetzungen zweckmäßig analog zur Herstellung der Polyetheresteramide Q1 aus den Polyetheresteramiden P1 und den Divinylethern C1 vornimmt.

Bevorzugte biologisch abbaubare Polyetheresteramide P2 sind charakterisiert durch ein Molekulargewicht (Mₙ) im Bereich von 5000 bis 80000, vorzugsweise von 6000 bis 45000, besonders vorzugsweise von 10000 bis 40000 g/mol, eine Viskositätszahl im Bereich von 30 bis 450, vorzugsweise von 50 bis 400 g/ml (gemessen in o-Dichlorbenzol/Phenol (Gew.-Verhaltnis 50/50) bei einer Konzentration von 0,5 Gew.-% Polyetheresteramid P2 bei einer Temperatur von 25°C) und einen Schmelzpunkt im Bereich von 50 bis 255, vorzugsweise von 60 bis 255°C aufweisen.

Die biologisch abbaubaren Polyetherester P2 erhalt man in der Regel, indem man eine Mischung zur Reaktion bringt, bestehend im wesentlichen aus
(g1) einer Mischung, bestehend im wesentlichen aus
   20 bis 95,bevorzugt von 25 bis 80, besonders bevorzugt von 30 bis 70 mol-% Adipinsäure oder esterbildende Derivate davon oder Mischungen davon,
   5 bis 80,bevorzugt von 20 bis 75, besonders bevorzugt von 30 bis 70 mol-% Terephthalsäure oder esterbildende Derivate davon oder Mischungen davon, und
   0 bis 5,bevorzugt von 0 bis 3, besonders bevorzugt von 0,1 bis 2 mol-% einer sulfonatgruppenhaltigen Verbindung,
   wobei die Summe der einzelnen Molprozentangaben 100 mol-% beträgt,
(g2) Mischung (b2),
   wobei man das Molverhältnis von (g1) zu (g2) im Bereich von 0,4:1 bis 1,5:1, vorzugsweise von 0,6:1 bis 1,25:1 wählt,
(g3) von 0,01 bis 40, vorzugsweise von 0,1 bis 30 Gew.-%, bezogen auf Komponente (g1), einer Aminocarbonsäure B1, und
(g4) von 0 bis 5, vorzugsweise von 0 bis 4, besonders bevorzugt von 0,01 bis 3,5 mol-%, bezogen auf Komponente (g1), Verbindung D.

Die Herstellung der biologisch abbaubaren Polyetheresteramide P2 erfolgt zweckmäßig analog zur Herstellung der Polyetheresteramide P1, wobei die Zugabe der Aminocarbonsäure B1 sowohl zu Anfang der Umsetzung als auch nach der Veresterungs- bzw. Umesterungsstufe erfolgen kann.

In einer bevorzugten Ausführungsform setzt man Polyetheresteramide P2 ein, deren wiederkehrende Einheiten statistisch im Molekül verteilt sind.

Die biologisch abbaubaren thermoplastischen Formmassen T4 erhält man erfindungsgemäß, indem man in an sich bekannter Weise, bevorzugt unter Zusatz üblicher Additive wie Stabilisatoren, Verarbeitungshilfsmitteln, Füllstoffen etc. (siehe J. of Appl. Polym. Sc., Vol. 32, S. 6191 bis 6207, John Wiley & Sons, 1986; WO 92/0441; EP 515,203; Kunststoff-Handbuch, Bd. 3/1, Carl Hanser Verlag München, 1992, S. 24 bis 28)
(h1) 99,5 bis 0,5 Gew.-% Polyetherester Q1 mit
(h2) 0,5 bis 99,5 Gew.-% Hydroxycarbonsäure H1 der allgemeinen Formel Va oder Vb

   HO-[-C(O)-M-O-]ₓH Va

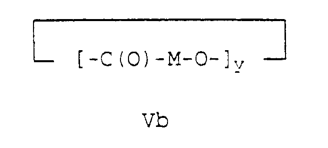

   in der x eine ganze Zahl von 1 bis 1500, vorzugsweise von 1 bis 1000 und y 1, 2, 3 oder 4, vorzugsweise 1 und 2, bedeuten, und M für einen Rest steht, der ausgewählt ist aus der Gruppe bestehend aus Phenylen, -(CH₂)_{z}-, wobei z eine ganze Zahl von 1, 2, 3, 4 oder 5, vorzugsweise 1 und 5, bedeutet, -C(R²)H- und -C(R²)HCH₂-, wobei R² für Methyl oder Ethyl steht, mischt.

In einer bevorzugten Ausführungsform setzt man als Hydroxycarbonsäure H1 ein: Glycolsäure, D-, L-, D,L-Milchsäure, 6-Hydroxyhexansäure, deren cyclische Derivate wie Glycolid (1,4-Dioxan-2,5-dion), D-, L-Dilactid (3,6-dimethyl-1,4-dioxan-2,5-dion), p-Hydroxybenzoesäure sowie deren Oligomere und Polymere wie 3-Polyhydroxybuttersäure, Polyhydroxyvaleriansäure, Polylactid (beispielsweise als EcoPLA® (Fa. Cargill) erhältlich) sowie eine Mischung aus 3-Polyhydroxybuttersäure und Polyhydroxyvaleriansäure (letzteres ist unter dem Namen Biopol® von Zeneca erhältlich).

In einer bevorzugten Ausführungsform setzt man hochmolekulare Hydroxycarbonsäuren H1 wie Polycaprolacton oder Polylactid oder Polyglykolid mit einem Molekulargewicht (Mₙ) im Bereich von 10000 bis 150000, vorzugsweise von 10000 bis 100000 g/mol ein.

Aus WO 92/0441 und EP-A 515,203 ist es bekannt, daß hochmolekulares Polylactid ohne Zusätze von weichmachern für die meisten Anwendungen zu spröde ist. In einer bevorzugten Ausführungsform kann man ein Blend ausgehend von 0,5 bis 20, vorzugsweise von 0,5 bis 10 Gew.-% Polyetheresteramid Q1 und 99,5 bis 80, vorzugsweise von 99,5 bis 90 Gew.-% Polylactid herstellen, das eine deutliche Verbesserung der mechanischen Eigenschaften, beispielsweise eine Erhöhung der Schlagzähigkeit, gegenüber reinem Polylactid aufweist.

Eine weitere bevorzugte Ausführungsform betrifft ein Blend, erhältlich durch Mischen von 99,5 bis 40, vorzugsweise von 99,5 bis 60 Gew.-% Polyetheresteramid Q1 und von 0,5 bis 60, vorzugsweise von 0,5 bis 40 Gew.-% einer hochmolekularen Hydroxycarbonsäure H1, besonders bevorzugt Polylactid, Polyglycolid, 3-Polyhydroxybuttersäure und Polycaprolacton. Solche Blends können vollständig biologisch abgebaut werden und weisen nach den bisherigen Beobachtungen sehr gute mechanische Eigenschaften auf.

Nach bisherigen Beobachtungen erhält man die erfindungsgemäßen thermoplastischen Formmassen T4 bevorzugt dadurch, daß man kurze Mischzeiten einhält, beispielsweise bei einer Durchführung des Mischens in einem Extruder. Durch Wahl der Mischparameter, insbesondere der Mischzeit und gewünschtenfalls der Verwendung von Deaktivatoren, sind auch Formmassen zugänglich, die überwiegend Blendstrukturen aufweisen, d.h., daß der Mischvorgang so gesteuert werden kann, daß zumindest teilweise auch Umesterungsreaktionen stattfinden können.

In einer weiteren bevorzugten Ausführungsform kann man O bis 50, vorzugsweise O bis 30 Mol-% der Adipinsäure, oder ihrer esterbildende Derivate oder deren Mischungen, durch mindestens eine andere aliphatische C₄-C₁₀- oder cycloaliphatische C₅-C₁₀-Dicarbonsäure oder Dimerfettsäure wie Bernsteinsäure, Glutarsäure, Pimelinsäure, Korksäure, Azelainsäure oder Sebazinsäure oder ein Esterderivat wie deren Di-C₁-C₆-alkylester oder deren Anhydride wie Bernsteinsäureanhydrid, oder deren Mischungen, ersetzen, bevorzugt Bernsteinsäure, Bernsteinsäureanhydrid, Sebacinsäure, Dimerfettsäure und Di-C₁-C₆-alkylester wie Dimethyl-, Diethyl-, Di-n-Propyl-, Diisobutyl-, Di-n-pentyl-, Dineopentyl- Di-n-hexylester davon, insbesondere Dimethylbernsteinsäure.

Eine besonders bevorzugte Ausführungsform betrifft den Einsatz als Komponente (b1) die in der EP-A 7445 beschriebene Mischung aus Bernsteinsäure, Adipinsäure und Glutarsäure sowie deren C₁-C₆-Alkylester wie Dimethyl-, Diethyl-, Di-n-Propyl-, Diisobutyl-, Di-n-pentyl-, Dineopentyl- Di-n-hexyl-ester, insbesondere deren Dimethylester.

In einer weiteren bevorzugten Ausführungsform kann man O bis 50, vorzugsweise O bis 40 Mol-% der Terephthalsäure oder ihrer esterbildende Derivate, oder deren Mischungen durch mindestens eine andere aromatische Dicarbonsäure wie Isophthalsäure, Phthalsäure oder 2,6-Naphthalindicarbonsäure, bevorzugt Isophthalsäure, oder ein Esterderivat wie einen Di-C₁-C₆-alkylester wie Dimethyl-, Diethyl-, Di-n-Propyl-, Diisobutyl-, Di-n-pentyl-, Dineopentyl-Di-n-hexyl-ester, insbesondere einen Dimethylester, oder deren Mischungen, ersetzen.

Allgemein sei angemerkt, daß man die unterschiedlichen erfindungsgemaßen Polymere wie üblich aufarbeiten kann, indem man die Polymere isoliert, oder, insbesondere, wenn man die Polyetheresteramide P1, P2, Q2 und Q1 weiter umsetzen möchte, indem man die Polymere nicht isoliert, sondern gleich weiterverarbeitet.

Die erfindungsgemäßen Polymere kann man durch Walzen, Streichen, Spritzen oder Gießen auf Beschichtungsunterlagen aufbringen. Bevorzugte Beschichtungsunterlagen sind solche, die kompostierbar sind oder verrotten wie Formkörper aus Papier, Cellulose oder Stärke.

Die erfindungsgemäßen Polymere können außerdem zur Herstellung von Formkörpern verwendet werden, die kompostierbar sind. Als Formkörper seien beispielhaft genannt: Wegwerfgegenstände wie Geschirr, Besteck, Müllsäcke, Folien für die Landwirtschaft zur Ernteverfrühung, Verpackungsfolien und Gefäße für die Anzucht von Pflanzen.

Des weiteren kann man die erfindungsgemaßen Polymere in an sich bekannter Weise zu Fäden verspinnen. Die Fäden kann man gewünschtenfalls nach üblichen Methoden verstrecken, streckzwirnen, streckspulen, streckschären, streckschlichten und strecktexturieren. Die Verstreckung zu sogenanntem Glattgarn kann dabei in ein und demselben Arbeitsgang (fully drawn yarn oder fully oriented yarn), oder in einem getrennten Arbeitsgang erfolgen. Das Streckschären, Streckschlichten und die Strecktexturierung führt man im allgemeinen in einem vom Spinnen getrennten Arbeitsgang durch. Die Fäden kann man in an sich bekannter Weise zu Fasern weiterverarbeiten. Aus den Fasern sind dann Flächengebilde durch Weben, Wirken oder Stricken zugänglich.

Die oben beschriebenen Formkörper, Beschichtungsmittel und Fäden etc. können gewünschtenfalls auch Füllstoffe enthalten, die man während des Polymerisationsvorganges in irgendeiner Stufe oder nachträglich, beispielsweise in eine Schmelze der erfindungsgemaßen Polymere einarbeiten kann.

Bezogen auf die erfindungsgemäßen Polymere kann von 0 bis 80 Gew.-% Füllstoffe zusetzen. Geeignete Füllstoffe sind beispielsweise Ruß, Stärke, Ligninpulver, Cellulosefasern, Naturfasern wie Sisal und Hanf, Eisenoxide, Tonmineralien, Erze, Calciumcarbonat, Calciumsulfat, Bariumsulfat und Titandioxid. Die Füllstoffe können zum Teil auch Stabilisatoren wie Tocopherol (Vitamin E), organische Phosphorverbindungen, Mono-, Di- und Polyphenole, Hydrochinone, Diarylamine, Thioether, UV-Stabilisatoren, Nukleierungsmittel wie Talkum sowie Gleit- und Formtrennmittel auf Basis von Kohlenwasserstoffen, Fettalkoholen, höheren Carbonsäuren, Metallsalzen höherer Carbonsäuren wie Calcium- und Zinkstearat, und Montanwachsen enthalten. Solche Stabilisatoren etc. sind in Kunststoff-Handbuch, Bd. 3/1, Carl Hanser Verlag, München, 1992, S. 24 bis 28 ausführlich beschrieben.

Die erfindungsgemäßen Polymere können außerdem durch den Zusatz von organischen oder anorganischen Farbstoffen beliebig eingefärbt werden. Die Farbstoffe können im weitesten Sinne auch als Füllstoff angesehen werden.

Ein besonderes Anwendungsgebiet der erfindungsgemäßen Polymere betrifft die Verwendung als kompostierbare Folie oder einer kompostierbaren Beschichtung als Außenlage von Windeln. Die Außenlage der Windeln verhindert wirksam den Durchtritt von Flüssigkeiten, die im Innern der Windel vom Fluff und Superabsorbern, bevorzugt von bioabbaubaren Superabsorbern, beispielsweise auf Basis von vernetzter Polyacrylsäure oder vernetztem Polyacrylamid, absorbiert werden. Als Innenlage der Windel kann man ein Faservlies aus einem Cellulosematerial verwenden. Die Außenlage der beschriebenen Windeln ist biologisch abbaubar und damit kompostierbar. Sie zerfällt beim Kompostieren, so daß die gesamte Windel verrottet, während mit einer Außenlage aus beispielsweise Polyethylen versehene Windeln nicht ohne vorherige Zerkleinerung oder aufwendige Abtrennung der Polyethylenfolie kompostiert werden können.

Eine weitere bevorzugte Verwendung der erfindungsgemäßen Polymere und Formmassen betrifft die Herstellung von Klebstoffen in an sich bekannter Weise (siehe beispielsweise Encycl. of Polym. Sc. and Eng. Vol.1, "Adhesive Compositions", S. 547 bis 577). Analog zur Lehre der EP-A 21042 kann man die erfindungsgemäßen Polymere und Formmassen auch mit geeigneten klebrigmachenden thermoplastischen Harzen, bevorzugt Naturharzen, nach dort beschriebenen Methoden verarbeiten. Analog zur Lehre der DE-A 4,234,305 kann man die erfindungsgemaßen Polymere und Formmassen auch zu lösungsmittelfreien Klebstoffsystemen wie Hot-melt-Folien weiterverarbeiten.

Ein weiteres bevorzugtes Anwendungsgebiet betrifft die Herstellung vollständig abbaubarer Blends mit Stärkemischungen (bevorzugt mit thermoplastischer Stärke wie in der WO 90/05161 beschrieben) analog zu dem in der DE-A 42 37 535 beschriebenen Verfahren. Die erfindungsgemäßen Polymere und thermoplastischen Formmassen lassen sich nach bisherigen Beobachtungen auf Grund ihrer hydrophoben Natur, ihren mechanischen Eigenschaften, ihrer vollständigen Bioabbaubarkeit, ihrer guten Verträglichkeit mit thermoplastischer Stärke und nicht zuletzt wegen ihrer günstigen Rohstoffbasis vorteilhaft als synthetische Blendkomponente einsetzen.

Weitere Anwendungsgebiete betreffen beispielsweise die Verwendung der erfindungsgemäßen Polymere in landwirtschaftlichem Mulch, Verpackungsmaterial für Saatgut und Nährstoffe, Substrat in Klebefolien, Babyhöschen, Taschen, Bettücher, Flaschen, Kartons, Staubbeutel, Etiketten, Kissenbezüge, Schutzkleidung, Hygieneartikel, Taschentücher, Spielzeug und Wischer.

Eine weitere Verwendung der erfindungsgemäßen Polymere und Formmassen betrifft die Herstellung von Schäumen, wobei man im allgemeinen nach an sich bekannten Methoden vorgeht (siehe EP-A 372,846; Handbook of Polymeric foams and Foam Technology, Hanser Publisher, München, 1991, S. 375 bis 408). Üblicherweise wird dabei das erfindungsgemaße Polymere bzw. Formmasse zunächst aufgeschmolzen, gewünschtenfalls unter Zugabe von bis zu 5 Gew.-% Verbindung D, bevorzugt Pyromellitsäuredianhydrid und Trimellitsäureanhydrid, dann mit einem Treibmittel versetzt und die so erhaltene Mischung durch Extrusion vermindertem Druck ausgesetzt, wobei die Schäumung entsteht.

Die Vorteile der erfindungsgemaßen Polymere gegenüber bekannten bioabbaubaren Polymere liegen in einer günstigen Rohstoffbasis mit gut verfügbaren Ausgangsstoffen wie Adipinsäure, Terephthalsäure und gängigen Diolen, in interessanten mechanischen Eigenschaften durch Kombination von "harten" (durch die aromatischen Dicarbonsäuren wie beispielsweise Terephthalsäure) und "weichen" (durch die aliphatischen Dicarbonsäuren, wie beispielsweise Adipinsäure) Segmenten in der Polymerkette und der Variation der Anwendungen durch einfache Modifizierungen, in einem guten Abbauverhalten durch Mikroorganismen, besonders im Kompost und im Boden, und in einer gewissen Resistenz gegenüber Mikroorganismen in wäßrigen Systemen bei Raumtemperatur, was für viele Anwendungsbereiche besonders vorteilhaft ist. Durch den statistischen Einbau der aromatischen Dicarbonsäuren der Komponenten (b1) in verschiedenen Polymeren wird der biologische Angriff ermöglicht und damit die gewünschte biologische Abbaubarkeit erreicht.

Besonders vorteilhaft an den erfindungsgemaßen Polymere ist, daß durch maßgeschneiderte Rezepturen sowohl biologisches Abbauverhalten und mechanische Eigenschaften für den jeweiligen Anwendungszweck optimiert werden können.

Des weiteren können je nach Herstellverfahren vorteilhaft Polymere mit überwiegend statistisch verteilten Monomerbausteinen, Polymere mit überwiegend Blockstrukturen sowie Polymere mit überwiegend Blendstruktur oder Blends erhalten werden.

### Beispiele

### Abkürzungen

| | |
|---|---|
| TTB | Titantetrabutylat |
| DMT | Dimethylterephthalat |

### Herstellung eines Polyetheresteramides Q1ₐ

### Vorprodukt 1

4,672 kg 1,4-Butandiol, 7000 kg Adipinsäure und 50 g Zinn-dioctoat wurden unter Inertgas (Stickstoff) auf 230 bis 240°C aufgeheizt. Nachdem die Hauptmenge des bei der Umsetzung gebildeten Wassers abdestilliert war, wurden 10 g TTB zugesetzt. Wenn die Säurezahl SZ unter 1 war, wurde unter reduziertem Druck der Überschuß an Butandiol abdestilliert bis eine OH-Zahl von ca. 56 erreicht war.

### Vorprodukt 2

58,5 g DMT wurden mit 36,5 g Ethanolamin unter Stickstoffatmosphäre bei langsamem Rühren auf 180°C erhitzt. Nach 30 min wurden unter Stickstoffatmosphäre noch 360 g des Vorproduktes 1, 175 g DMT, 0,65 g Pyromellitsäuredianhydrid, 300 g 1,4-Butandiol, 63,5 g Diethylenglykol und 1 g TTB zugesetzt. Dabei wurde das während der Umesterungsreaktion gebildete Methanol und Wasser abdestilliert. Innerhalb von 3 h wurde unter Erhöhung der Rührgeschwindigkeit auf 230°C erhitzt und nach 2 h wurden 0,4 g 50%ige wäßrige phosphorige Säure zugegeben. Innerhalb von 2 h wurde der Druck auf 5 mbar abgesenkt und bei 240°C noch 45 min unter 2 mbar gehalten, wobei das im Überschuß eingesetzte 1,4-Butandiol abdestillierte. Es wurde ein elastisches, leicht bräunlich gefärbtes Produkt erhalten.

| | |
|---|---|
| OH-Zahl | 16 mg KOH/g |
| SZ-Zahl | unter 1 mg KOH/g |
| prim.Amin | unter 0,1 g/100 g |

Aus DSC-Messungen wurden für das Vorprodukt 2 zwei Schmelzpunkte bei 63°C und 82°C sowie eine Glasübergangstemperatur von -36°C ermittelt.

### Q1ₐ

200 g des Vorproduktes 2 wurden auf 170°C abgekühlt und 4,2 g 1,4-Butandioldivinylether in 4 Portionen innerhalb von 45 min zugegeben, was zu einer deutlichen Erhöhung der Schmelzviskosität führte. Dies läßt auf den Molekulargewichtsaufbau schließen.

| | |
|---|---|
| OH-Zahl | 4 mg KOH/g |
| SZ-Zahl | unter 1 mg KOH/g |

### Herstellung eines biologisch abbaubaren Polymeren T1ₐ

384 g 1,4-Butandiol, 6,1 g Ethanolamin, 316 g DMT und 1 g TTB wurden unter Stickstoffatmosphäre bei langsamem Rühren bis auf 180°C erhitzt. Dabei wurde das während der Umesterungsreaktion gebildete Methanol abdestilliert. Nach Zugabe vom 101,6 g Adipinsäure und 278 g eines Polyethylenglykol mit einem Molekulargewicht von 600 g/mol wurde unter Stickstoffatmosphäre innerhalb von 2 h unter Erhöhung der Rührgeschwindigkeit auf 230°C erhitzt und das bei der Kondensationsreaktion gebildete Wasser abdestilliert. Dann wurden 62,5 g eines nicht extrahierten, monomerenhaltigen Polyamids mit einer Viskositätszahl von 68 und ca. 10,5 Gew.-% Restextrakt (z.B. Ultramid®B15 der Firma BASF) unter Stickstoffatmosphäre zugegeben. Nach 2 h wurden 0,4 g 50%ige wäßrige phosphorige Säure zugegeben, der Druck stufenweise auf 5 mbar abgesenkt und bei 230°C noch 45 min unter 2 mbar gehalten, wobei das während der Kondensationsreaktion gebildete Wasser und das im Überschuß eingesetzte 1,4-Butandiol abdestillierte.

| | |
|---|---|
| OH | 19 mg KOH/g |
| SZ | unter 1 mg KOH/g |

Aus DSC-Messungen wurden zwei Schmelzpunkte bei 124 und 216°C und eine Glasübergangstemperatur bei -44°C ermittelt.

200 g dieses Produktes wurden auf 170°C abgekühlt und 4,95 g 1,4-Butandioldivinylether in 4 Portionen innerhalb von 45 min zugegeben. Der Molekulargewichtsaufbau konnte anhand der deutlichen Erhöhung der Schmelzviskosität festgestellt werden.

| | |
|---|---|
| OH-Zahl | 6 mg KOH/g |
| SZ-Zahl | unter 1 mg KOH/g |

Enzym-Test mit Rhizopus arrizus: _{Δ}DOC: 82 mg/l / _{Δ}DOC (PCL): 2455.

### Meßmethoden

### Enzym-Test

Die Polymere wurden in einer Mühle mit flüssigem Stickstoff oder Trockeneis gekühlt und fein gemahlen (je größer die Oberfläche des Mahlguts, desto schneller der enzymatische Abbau). Zur eigentlichen Durchführung des Enzym-Tests wurden 30 mg fein gemahlenes Polymerpulver und 2 ml einer 20 mmol wäßrigen K₂HPO₄/ KH₂PO₄-Pufferlösung (PH-Wert: 7,0) in ein Eppendorfreagenzgefäß (2 ml) gegeben und 3 h bei 37°C auf einem Schwenker equilibriert Anschließend wurden 100 units Lipase aus entweder Rhizopus arrhizus, Rhizopus delemar oder Pseudomonas pl. zugesetzt und 16 h bei 37°C unter Rühren (250 rpm) auf dem Schwenker inkubiert. Danach wurde die Reaktionsmischung durch eine Millipore®-Membran (0,45 µm) filtriert und der DOC (dissolved organic carbon) des Filtrats gemessen. Analog dazu wurden je eine DOC-Messung nur mit Puffer und Enzym (als Enzymkontrolle) und eine nur mit Puffer und Probe (als Blindwert) durchgeführt.

Die ermittelten ΔDOC(Dissolved Organic Carbon)-Werte (DOC(Probe + Enzym)-DOC(Enzymkontrolle)-DOC(Blindwert)) können als Maß für die enzymatische Abbaubarkeit der Proben angesehen werden. Sie sind jeweils im Vergleich zu einer Messung mit Pulver von Polycaprolacton® Tone P 787 (Union Carbide) dargestellt. Bei der Bewertung ist darauf zu achten, daß es sich nicht um absolut quantifizierbare Daten handelt. Auf den Zusammenhang zwischen Oberfläche des Mahlguts und Schnelligkeit des enzymatischen Abbaus wurde weiter oben bereits hingewiesen. Des weiteren können auch die Enzymaktivitäten schwanken.

Die Bestimmungen der Hydroxyl-Zahl (OH-Zahl) und Säure-Zahl (SZ) erfolgten nach folgenden Methoden:
(a) Bestimmung der scheinbaren Hydroxyl-Zahl
   Zu ca. 1 bis 2 g exakt einqewogener Prüfsubßtanz wurden 10 ml Toluol und 9,8 ml Acetylierungsreagenz (s.u.) gegeben und 1 h bei 95°C unter Rühren erhitzt. Danach wurden 5 ml dest. Wasser zugeführt. Nach Abkühlen auf Raumtemperatur wurden 50 ml Tetrahydrofuran (THF) zugesetzt und mit ethanolischer KOH-Maßlösung gegen Wendepunkt potentiographisch titriert.
   Der Versuch wurde ohne Prüfsubstanz wiederholt (Blindprobe).
   Die scheinbare OH-Zahl wurde dann aufgrund folgender Formel ermittelt: scheinb. OH-Zahl c·t·56,1·(V2-V1)/m (in mg KOH/g) wobei
   c = Stoffmengenkonzentration der ethanol. KOH-Maßlösung in mol/l,
   t = Titer der ethanol. KOH-Maßlösung
   m = Einwaage in mg der Prüfsubstanz
   V1 = Verbrauch der Maßlösung mit Prüfsubstanz in ml
   V2 = Verbrauch der Maßlösung ohne Prüfsubstanz in ml
   bedeuten.
   Verwendete Reagenzien:
   ethanol. KOH-Maßlösung, c = 0,5 mol/l, Titer 0,9933 (Merck, Art.Nr. 1.09114)
   Essigsäureanhydrid p.A. (Merck, Art.Nr. 42)
   Pyridin p.A. (Riedel de Haen, Art.-Nr 33638)
   Essigsäure p.A. (Merck, Art.Nr. 1.00063)
      - Acetylierungsreagenz:: 810 ml Pyridin, 100 ml
      Essigsäureanhydrid und 9 ml
      Essigsäure
      Wasser, deionisiert
      THF und Toluol
(b) Bestimmung der Saurezahl (SZ)
   Ca. 1 bis 1,5 g Prüfsubstanz wurden exakt eingewogen und mit 10 ml Toluol und 10 ml Pyridin versetzt und anschließend auf 95°C erhitzt. Nach dem Lösen wurde auf Raumtemperatur abgekühlt, 5 ml Wasser und 50 ml THF zugegeben und mit 0,1 N ethanol. KOHMaßlösung titriert.
   Die Bestimmung wurde ohne Prüfsubstanz wiederholt (Blindprobe)
   Die Säure-Zahl wurde dann aufgrund folgender Formel ermittelt:
   SZ = c·t·56,1·(V1-V2)/m (in mg KOH/g) wobei
   c = Stoffmengenkonzentration der ethanol. KOH-Maßlösung in mol/l,
   t = Titer der ethanol. KOH-Maßlösung
   m = Einwaage in mg der Prüfsubstanz
   V1 = Verbrauch der Maßlösung mit Prüfsubstanz in ml
   V2 = Verbrauch der Maßlösung ohne Prüfsubstanz in ml
   bedeuten.
   Verwendete Reagenzien:
   ethanol. KOH-Maßlösung, c = 0,1 mol/l, Titer = 0,9913 (Merck, Art.Nr. 9115)
   Pyridin p.A. (Riedel de Haen, Art.Nr. 33638)
   Wasser, deionisiert
   THF und Toluol
(c) Bestimmung der OH-Zahl
   Die OH-Zahl ergibt sich aus der Summe der scheinbaren OH-Zahl und der SZ:
   OH-Zahl = scheinb. OH-Zahl + SZ

   Die Viskositätszahl (VZ) wurde in o-Dichlorbenzol/Phenol (Gew.-Verhältnis 50/50) bei einer Konzentration von 0,5 Gew.-% Polymer bei einer Temperatur von 25°C gemessen.
   Die DSC-Messungen wurden mit einem DSC-Gerät 912+Thermal Analyzer 990 der Fa. DuPont durchgeführt. Die Temperatur- und Enthalpiekalibrierung erfolgte in üblicher Weise. Die Probeneinwaage betrug typischerweise 13 mg. Heiz- und Kühlraten betrugen 20 K/min. Die Proben wurden unter folgenden Bedingungen vermessen: 1. Aufheizender Lauf an Proben im Anlieferungszustand, 2. Schnelles Abkühlen aus der Schmelze, 3. Aufheizender Lauf an aus der Schmelze abgekühlten Proben (Proben aus 2). Die jeweils zweiten DSC-Läufe dienten dazu, nach Einprägen einer einheitlichen thermischen Vorgeschichte, einen Vergleich zwischen den verschiedenen Proben zu ermöglichen.

## Patentansprüche

1. Biologisch abbaubare Polyetheresteramide Q1 mit einem Molekulargewicht (Mₙ) im Bereich von 6000 bis 80000 g/mol, einer Viskositätszahl im Bereich von 30 bis 450 g/ml (gemessen in o-Dichlorbenzol/Phenol (Gew.-Verhältnis 50/50) bei einer Konzentration von 0,5 Gew.-% Polyetheresteramid Q1 bei einer Temperatur von 25°C), und einen Schmelzpunkt im Bereich von 50 bis 200°C, erhältlich durch Reaktion einer Mischung aus
(a1) von 95 bis 99,9 Gew.-% Polyetheresteramid P1 mit einem Molekulärgewicht (Mₙ) im bereich von 5000 bis 80000 g/ mol, einer Viskositätszahl im Bereich von 30 bis 450 g/ml (gemessen in o-Dichlorbenzol/Phenol (Gew.-Verhältnis 50/50) bei einer Konzentration von 0,5 Gew.-% Polyetheresteramid P1 bei einer Temperatur von 25°C) und einen Schmelzpunkt im Bereich von 50 bis 200°C, erhältlich durch Reaktion einer Mischung, bestehend im wesentlichen aus
(b1) einer Mischung, bestehend im wesentlichen aus
(b11) 20 bis 95 mol-% Adipinsäure oder esterbildende Derivate davon oder Mischungen davon,
(b12) 5 bis 80 mol-% Terephthalsäure oder esterbildende Derivate davon oder Mischungen davon, und
(b13) 0 bis 5 mol-% einer sulfonatgruppenhaltigen Verbindung, wobei 0 bis 50 mol-% der Komponente (b11) durch mindestens eine andere aliphatische C₄-C₁₀- oder cycloaliphatische C₅-C₁₀-Dicarbonsäure oder Dimerfettsäure ersetzt sein kann und wobei 0 bis 50 mol-% der Komponente (b12) durch eine andere aromatische Dicarbonsäure ersetzt sein kann, die Summe der einzelnen Molprozentangaben 100 mol-% beträgt, und
(b2) einer Mischung aus Dihydroxyverbindungen aus
(b21) von 15 bis 99,3 mol-% einer Dihydroxyverbindung, ausgewählt aus der Gruppe bestehend aus C₁-C₆-Alkandiolen und C₅-C₁₀-Cycloalkandiolen,
(b22) von 0,2 bis 85 mol-% einer Etherfunktionen-enthaltenden Dihydroxyverbindung gemäß Formel I
HO-[(CH₂)ₙ-O]ₘ-H I
in der n für 2, 3 oder 4 und m für eine ganze Zahl von 2 bis 250 stehen, oder Mischungen davon,
(b23) von 0,5 bis 80 mol-% eines Amino-C₂-C₁₂-alkanols oder eines Amino-C₅-C₁₀-cycloalkanols, und
(b24) von 0 bis 50 mol-% eines Diamino-C₁-C₈-Alkans,
(b25) von 0 bis 50 mol-% eines 2,2'-Bisoxazolins der allgemeinen Formel II 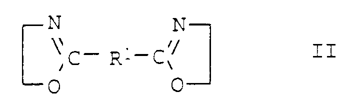 wobei R¹ eine Einfachbindung, eine (CH₂)_{q}-Alkylengruppe, mit q = 2, 3 oder 4, oder eine Phenylengruppe bedeutet, wobei die Summe der einzelnen Molprozentangaben 100 mol-% beträgt,
wobei an das Molverhältnis von (b1) zu (b2) im Bereich von 0,4:1 bis 1,5:1 wählt,
(a2) von 0,1 bis 5 Gew.-% eines Divinylethers C1 und
(a3) von 0 bis 5 mol-%, bezogen auf Komponente (b1) aus der Herstellung von P1, Verbindung D mit mindestens drei zur Esterbildung befähigten Gruppen.

2. Biologisch abbaubare Polymere T1 mit einem Molekulargewicht (Mₙ) im Bereich von 8000 bis 80000 g/mol, mit einer Viskositätszahl im Bereich von 30 bis 450 g/ml (gemessen in o-Dichlorbenzol/Phenol (Gew.-Verhältnis 50/50) bei einer Konzentration von 0,5 Gew.-% Polymer T1 bei einer Temperatur von 25°C) und einem Schmelzpunkt im Bereich von 50 bis 255°C, erhältlich durch Umsetzung des Polyetheresteramids Q2 mit einem Molekulargewicht (Mₙ) im Bereich von 5000 bis 80000 g/mol, einer Viskositätszahl im Bereich von 30 bis 450 g/ml (gemessen in o-Dichlorbenzol/Phenol (Gew.-Verhältnis 50/50) bei einer Konzentration von 0,5 Gew.-% Polyetheresteramid Q2 bei einer Temperatur von 25°C), und einen Schmelzpunkt im Bereich von 50 bis 255°C, erhältlich durch Reaktion einer Mischung bestehend im wesentlichen aus
(c1) Polyetheresteramid P1, nach Anspruch 1,
(c2) 0,01 bis 50 Gew.-%, bezogen auf (c1), Aminocarbonsäure B1
wobei die aminocarbonsäure B1 ausgewählt ist, aus der Gruppe, bestehend aus den natürlichen Aminosäuren, Polyamiden mit einem Molekulargewicht von höchstens 18000 g/mol, erhältlich durch Polykondensation einer Dicarbonsäure mit 4 bis 6 C-Atomen und einem Diamin mit 4 bis 10 C-Atomen und Verbindungen, die definiert sind durch die Formeln IIIa und IIIb
HO-[-C(O)-G-N(H)-]ₚH IIIa 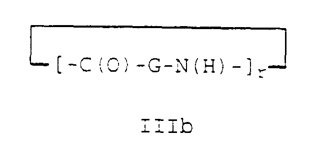
in der p eine ganze Zahl von 1 bis 1500 und r eine ganze Zahl von 1 bis 4 bedeuten, und G für einen Rest steht, der ausgewählt ist aus der Gruppe bestehend aus Phenylen, -(CH₂)ₙ-, wobei n eine ganze Zahl von 1 bis 12 bedeutet, -C(R²)H- und -C(R²)HCH₂⁻, wobei R² für Methyl oder Ethyl steht,
sowie Polyoxazoline mit der wiederkehrenden Einheit IV 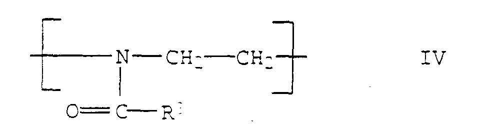 in der R³ für Wasserstoff, C₁-C₆-Alkyl, C₅-C₈-Cycloalkyl, unsubstituiertes oder mit C₁-C₄-Alkylgruppen bis zu dreifach substituiertes Phenyl oder für Tetrahydrofuryl steht,
und
(c3) 0 bis 5 mol-%, bezogen auf Komponente (b1) aus der Herstellung von P1, Verbindung D mit mindestens drei zur Esterbildung befähigten Gruppen,
mit (d1) 0,1 bis 5 Gew.-%, bezogen auf den Polyetheresteramid Q2, Divinylether C1 sowie
mit (d2) 0 bis 5 mol-%, bezogen auf Komponente (b1) aus der Herstellung von Polyetheresteramid Q2 über Polyetheresteramid P1, Verbindung D.

3. Biologisch abbaubare Polymere T2 mit einem Molekulargewicht (Mₙ) im Bereich von 8000 bis 80000 g/mol, mit einer Viskositätszahl im Bereich von 30 bis 450 g/ml (gemessen in o-Dichlorbenzol/Phenol (Gew.-Verhältnis 50/50) bei einer Konzentration von 0,5 Gew. -% Polymer T2 bei einer Temperatur von 25°C) und einem Schmelzpunkt im Bereich von 50 bis 255°C, erhältlich durch Umsetzung des Polyetheresteramids Q1 nach Anspruch 1 mit
(e1) 0,01 bis 50 Gew.-%, bezogen auf Polyetheresteramid Q1, Aminocarbonsäure B1 nach Anspruch 2 sowie mit
(e2) 0 bis 5 mol-%, bezogen auf Komponente (b1) aus der Herstellung von Polyetheresteramid Q1 über Polyetheresteramid P1 nach Anspruch 1, Verbindung D mit mindestens drei zur Esterbildung befähigten Gruppen.

4. Biologisch abbaubare Polymere T3 mit einem Molekulargewicht (Mₙ) im Bereich von 8000 bis 80000 g/mol, mit einer Viskositätszahl im Bereich von 30 bis 450 g/ml (gemessen in o-Dichlorbenzol/Phenol (Gew.-Verhältnis 50/50) bei einer Konzentration von 0,5 Gew.-% Polymer T3 bei einer Temperatur von 25°C) und einem Schmelzpunkt im Bereich von 50 bis 255°C, erhältlich durch Umsetzung von
(f1) Polyetheresteramid P2 mit einem Molekulargewicht (Mₙ) im Bereich von 5000 bis 80000 g/mol, einer Viskositätszahl im Bereich von 30 bis 450 g/ml (gemessen in o-Dichlorbenzol/Phenol) (Gew.-Verhältnis 50/50) bei einer Konzentration von 0,5 Gew.-% Polyetheresteramid P2 bei einer Temperatur von 25°C) und einem Schmelzpunkt im Bereich von 50 bis 255°C,
erhältlich durch Reaktion einer Mischung, bestehend im wesentlichen aus
(g1) einer Mischung, bestehend im wesentlichen aus
20 bis 95 mol-% Adipinsäure oder esterbildende Derivate davon oder Mischungen davon,
5 bis 80 mol-% Terephthalsäure oder esterbildende Derivate davon oder Mischungen davon, und
0 bis 5 mol-% einer sulfonatgruppenhaltigen Verbindung,
wobei die Summe der einzelnen Moiprozentangaben 100 mol-% beträgt,
(g2) Mischung (b2) nach Anspruch 1,
wobei man das Molverhältnis von (g1) zu (g2) im Bereich von 0,4:1 bis 1,5:1 wählt,
(g3) von 0,01 bis 40 Gew.-%, bezogen auf Komponente (g1), Aminocarbonsäure B1 nach Anspruch 2, und
(g4) von 0 bis 5 mol-%, bezogen auf Komponente (g1), Verbindung D mit mindestens drei zur Esterbildung befähigten Gruppen,
oder
(f2) einer Mischung bestehend im wesentlichen aus Polyetheresteramid P1 nach Anspruch 1 und 0,01 bis 50 Gew.-%, bezogen auf Polyetheresteramid P1, Aminocarbonsäure B1 nach Anspruch 2,
oder
(f3) einer Mischung bestehend im wesentlichen aus Polyetheresteramiden P1, die eine unterschiedliche Zusammensetzung voneinander aufweisen,
mit 0,1 bis 5 Gew.-%, bezogen auf die Menge der eingesetzten Polyetheresteramide, Divinylether C1 sowie
mit 0 bis 5 mol-%, bezogen auf die jeweiligen Molmengen an Komponente (b1), die zur Herstellung der eingesetzten Polyetheresteramide (f1) bis (f3) eingesetzt wurden, Verbindung D mit mindestens drei zur Esterbildung befähigten Gruppen.

5. Biologisch abbaubare thermoplastische Formmassen T4, erhältlich durch Mischen in an sich bekannter Weise von
(h1) 99,5 bis 0,5 Gew.-% Polyetheresteramid Q1 gemäß Anspruch 1 mit
(h2) 0,5 bis 99,5 Gew.-% Hydroxycarbonsäure H1 der allgemeinen Formel Va oder Vb
HO-[-C(O)-M-O-]ₓH Va 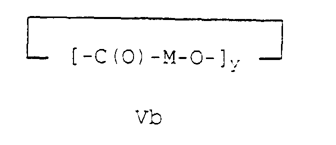
in der x eine ganze Zahl von 1 bis 1500 und y eine ganze Zahl von 1 bis 4 bedeuten, und M für einen Rest steht, der ausgewählt ist aus der Gruppe bestehend aus Phenylen, -(CH₂)_{z}, wobei z eine ganze Zahl von 1 bis 5 bedeutet, -C(R²)H- und -C(R²)HCH₂, wobei R² für Methyl oder Ethyl steht.

6. Verfahren zur Herstellung der biologisch abbaubaren Polyetheresteramide Q1 gemäß Anspruch 1 in an sich bekannter Weise, dadurch gekennzeichnet, daß man eine Mischung aus
(a1) von 95 bis 99,9 Gew.-% Polyetheresteramid P1 gemäß Anspruch 1,
(a2) von 0,1 bis 5 Gew.-% Divinylether C1 und
(a3) von 0 bis 5 mol-%, bezogen auf Komponente (b1) aus der Herstellung von P1, Verbindung D mit mindestens drei zur Esterbildung befähigten Gruppen
zur Reaktion bringt.

7. Verfahren zur Herstellung der biologisch abbaubaren Polymeren Tl gemäß Anspruch 2 in an sich bekannter Weise, dadurch gekennzeichnet, daß man Polyetheresteramid Q2, gemäß Anspruch 2, mit
(d1) 0,1 bis 5 Gew.-%, bezogen auf den Polyetheresteramid Q2, Divinylether C1 sowie mit
(d2) 0 bis 5 mol-%, bezogen auf Komponente (b1) aus der Herstellung von P1, gemäß Anspruch 1, sowie Polyetheresteramid Q2, Verbindung D mit mindestens drei zur Esterbildung befähigten Gruppen zur Reaktion bringt.

8. Verfahren zur Herstellung der biologisch abbaubaren Polymeren T2 gemäß Anspruch 3 in an sich bekannter weise, dadurch gekennzeichnet, daß man Polyetheresteramid Q1, gemäß Anspruch 1, mit
(e1) 0,01 bis 50 Gew.-%, bezogen auf Polyetheresteramid Q1, Aminocarbonsäure B1, gemäß Anspruch 2, sowie mit
(e2) 0 bis 5 mol-%, bezogen auf Komponente (b1) aus der Herstellung von P1, gemäß Anspruch 1, sowie des Polyetheresteramids Q1, Verbindung D mit mindestens drei zur Esterbildung befähigten Gruppen,
zur Reaktion bringt.

9. Verfahren zur Herstellung der biologisch abbaubaren Polymeren T3 gemäß Anspruch 4 in an sich bekannter Weise, dadurch gekennzeichnen, daß man
(f1) Polyetheresteramid P2, gemäß Anspruch 4, oder
(f2) eine Mischung, bestehend im wesentlichen aus Polyetheresteramid P1, gemäß Anspruch 1, und 0,01 bis 50 Gew.-%, bezogen auf Polyetheresteramid P1, Aminocarbonsäure B1, gemäß Anspruch 2, oder
(f3) eine Mischung, bestehend im wesentlichen aus Polyetheresteramiden P1, die eine unterschiedliche Zusammensetzung voneinander aufweisen,
mit 0,1 bis 5 Gew.-%, bezogen auf die Menge der eingesetzten Polyetheresteramide, Divinylether C1 sowie
mit 0 bis 5 mol-%, bezogen auf die jeweiligen Molmengen an Komponente (b1), die zur Herstellung der eingesetzten Polyetheresteramide (f1) bis (f3) eingesetzt wurden, Verbindung D mit mindestens drei zur Esterbildung befähigten Gruppen, zur Reaktion bringt.

10. Verfahren zur Herstellung der biologisch abbaubaren thermoplastischen Formmassen T4 gemäß Anspruch 5 in an sich bekannter Weise, dadurch gekennzeichnet, daß man
99,5 bis 0,5 Gew.-% Polyetheresteramid Q1 gemäß Anspruch 1, mit
0,5 bis 99,5 Gew.-% Hydroxycarbonsäure H1, gemäß Anspruch 5, mischt.

11. Verwendung der biologisch abbaubaren Polymere gemäß den Ansprüchen 1 bis 4 oder der thermoplastischen Formmassen gemäß Anspruch 5 oder hergestellt gemäß den Ansprüchen 6 bis 10 zur Herstellung von kompostierbaren Formkörpern.

12. Verwendung der biologisch abbaubaren Polymere gemäß den Ansprüchen 1 bis 4 oder der thermoplastischen Formmassen gemäß Anspruch 5 oder hergestellt gemäß den Ansprüchen 6 bis 10 zur Herstellung von Klebstoffen.

13. Kompostierbare Formkörper, erhältlich durch die Verwendung gemäß Anspruch 11.

14. Klebstoffe, erhältlich durch die Verwendung gemäß Anspruch 12.

15. Verwendung der biologisch abbaubaren Polymere gemäß den Ansprüchen 1 bis 4 oder der thermoplastischen Formmassen gemäß Anspruch 5 oder hergestellt gemäß den Anspruchen 6 bis 10 zur Herstellung von biologisch abbaubaren Blends, enthaltend im wesentlichen die erfindungsgemäßen Polymere und Stärke.

16. Biologisch abbaubare Blends, erhältlich durch die Verwendung gemäß Anspruch 15.

17. Verfahren zur Herstellung biologisch abbaubarer Blends gemäß Anspruch 15 in an sich bekannter Weise, dadurch gekennzeichnet, daß man Stärke mit den erfindungsgemäßen Polymeren mischt.

18. Verwendung der biologisch abbaubaren Polymere gemäß den Ansprüchen 1 bis 4 oder der thermoplastischen Formmassen gemäß Anspruch 5 oder hergestellt gemäß den Ansprüchen 6 bis 10 zur Herstellung von biologisch abbaubaren Schäumen.

19. Biologisch abbaubare Schäume, erhätlich durch die Verwendung gemäß Anspruch 18.

## Claims

1. A biodegradable polyetheresteramide Q1 with a molecular weight (Mₙ) in the range from 6000 to 80,000 g/mol, a viscosity number in the range from 30 to 450 g/ml (measured in o-dichlorobenzene/phenol (50/50 ratio by weight) at a concentration of 0.5% by weight polyetheresteramide Q1 at 25°C), and a melting point in the range from 50 to 200°C, obtainable by reacting a mixture of
(a1) from 95 to 99.9% by weight polyetheresteramide P1 with a molecular weight (Mₙ) in the range from 5000 to 80,000 g/mol, a viscosity number in the range from 30 to 450 g/ml (measured in o-dichlorobenzene/phenol (50/50 ratio by weight) at a concentration of 0.5% by weight polyetheresteramide P1 at 25°C) and a melting point in the range from 50 to 200°C, obtainable by reacting a mixture consisting essentially of
(b1) a mixture consisting essentially of
(b11) 20-95 mol% adipic acid or ester-forming derivatives thereof or mixtures thereof,
(b12) 5-80 mol% terephthalic acid or ester-forming derivatives thereof or mixtures thereof, and
(b13) 0-5 mol% of a compound containing sulfonate groups, where 0-50 mol% of component (b11) can be replaced by at least one other aliphatic C₄-C₁₀- or cycloaliphatic C₅-C₁₀-dicarboxylic acid or dimeric fatty acid and where 0-50 mol% of component (b12) can be replaced by another aromatic dicarboxylic acid, the total of the individual mole percentages is 100 mol%, and
(b2) a mixture of dihydroxy compounds consisting of
(b21) from 15 to 99.3 mol% of a dihydroxy compound selected from the group consisting of C₂-C₆-alkanediols and C₅-C₁₀-cycloalkanediols,
(b22) from 0.2 to 85 mol% of a dihydroxy compound which contains ether functionalities and has the formula I
HO-[(CH₂)ₙ-O]ₘ-H I
where n is 2, 3 or 4 and m is an integer from 2 to 250, or mixtures thereof,
(b23) from 0.5 to 80 mol% of an amino-C₂-C₁₂-alkanol or an amino-C₅-C₁₀-cycloalkanol and
(b24) from 0 to 50 mol% of a diamino-C₁-C₈-alkane,
(b25) from 0 to 50 mol% of a 2,2'-bisoxazoline of the general formula II 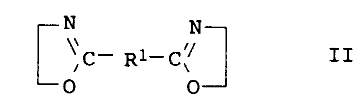 where R¹ is a single bond, a (CH₂)_{q} alkylene group with q = 2, 3 or 4, or a phenylene group, where the total of the individual mole percentages is 100 mol%,
where the molar ratio of (b1) to (b2) is chosen in the range from 0.4:1 to 1.5:1,
(a2) from 0.1 to 5% by weight of a divinyl ether C1 and
(a3) from 0 to 5 mol%, based on component (b1) from the preparation of P1, of compound D having at least three groups capable of ester formation.

2. A biodegradable polymer T1 with a molecular weight (Mₙ) in the range from 8000 to 80,000 g/mol, with a viscosity number in the range from 30 to 450 g/ml (measured in o-dichlorobenzene/phenol (50/50 ratio by weight) at a concentration of 0.5% by weight polymer T1 at 25°C) and a melting point in the range from 50 to 255°C, obtainable by reacting the polyether-esteramide Q2 with a molecular weight (Mₙ) in the range from 5000 to 80,000 g/mol, a viscosity number in the range from 30 to 450 g/ml (measured in o-dichlorobenzene/phenol (50/50 ratio by weight) at a concentration of 0.5% by weight polyetheresteramide Q2 at 25°C), and a melting point in the range from 50 to 255°C, obtainable by reacting a mixture consisting essentially of
(c1) polyetheresteramide P1, as claimed in claim 1,
(c2) 0.01-50% by weight, based on (c1), of amino carboxylic acid B1
where the amino carboxylic acid B1 is selected from the group consisting of the natural amino acids, polyamides with a molecular weight not exceeding 18,000 g/mol, obtainable by polycondensation of a dicarboxylic acid with 4 to 6 carbon atoms and a diamine with 4 to 10 carbon atoms and compounds which are defined by the formulae IIIa and IIIb
HO-[-C(O)-G-N(H)-]ₚH IIIa 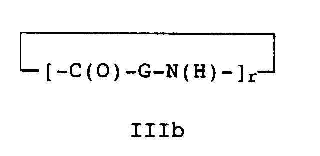
where p is an integer from 1 to 1500 and r is an integer from 1 to 4, and G is a radical which is selected from the group consisting of phenylene, -(CH₂)ₙ- where n is an integer from 1 to 12, -C(R²)H- and -C(R²)HCH₂- where R² is methyl or ethyl,
and polyoxazolines with the repeating unit IV 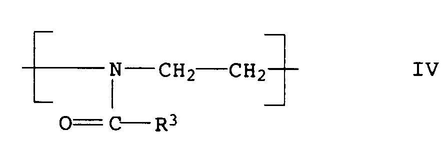 where R³ is hydrogen, C₁-C₆-alkyl, C₅-C₈-cycloalkyl, phenyl which is unsubstituted or substituted up to three times by C₁-C₄-alkyl groups, or tetrahydrofuryl,
and
(c3) 0-5 mol%, based on component (b1) from the preparation of P1, of compound D having at least three groups capable of ester formation,
with (d1) 0.1-5% by weight, based on the polyether-esteramide Q2, of divinyl ether C1, and
with (d2) 0-5 mol%, based on component (b1) from the preparation of polyetheresteramide Q2 via polyetheresteramide P1, of compound D.

3. A biodegradable polymer T2 with a molecular weight (Mₙ) in the range from 8000 to 80,000 g/mol, with a viscosity number in the range from 30 to 450 g/ml (measured in o-dichlorobenzene/phenol (50/50 ratio by weight) at a concentration of 0.5% by weight polymer T2 at 25°C) and a melting point in the range from 50 to 255°C, obtainable by reacting the polyether-esteramide Q1 as claimed in claim 1 with
(e1) 0.01-50% by weight, based on polyetheresteramide Q1, of amino carboxylic acid B1 as claimed in claim 2 and with
(e2) 0-5 mol%, based on component (b1) from the preparation of polyetheresteramide Q1 via polyetheresteramide P1 as claimed in claim 1, of compound D having at least three groups capable of ester formation.

4. A biodegradable polymer T3 with a molecular weight (Mₙ) in the range from 8000 to 80,000 g/mol, with a viscosity number in the range from 30 to 450 g/ml (measured in o-dichlorobenzene/phenol (50/50 ratio by weight) at a concentration of 0.5% by weight polymer T3 at 25°C) and a melting point in the range from 50 to 255°C, obtainable by reacting
(f1) polyetheresteramide P2 with a molecular weight (Mₙ) in the range from 5000 to 80,000 g/mol, a viscosity number in the range from 30 to 450 g/ml (measured in o-dichlorobenzene/phenol (50/50 ratio by weight) at a concentration of 0.5% by weight polyetheresteramide P2 at 25°C) and a melting point in the range from 50 to 255°C,
obtainable by reacting a mixture consisting essentially of
(g1) a mixture consisting essentially of
20-95 mol% adipic acid or ester-forming derivatives thereof or mixtures thereof,
5-80 mol% terephthalic acid or ester-forming derivatives thereof or mixtures thereof, and
0-5 mol% of a compound which contains sulfonate groups,
where the total of the individual mole percentages is 100 mol%,
(g2) mixture (b2) as claimed in claim 1,
where the molar ratio of (g1) to (g2) is chosen in the range from 0.4:1 to 1.5:1,
(g3) from 0.01 to 40% by weight, based on component (g1), of amino carboxylic acid B1 as claimed in claim 2, and
(g4) from 0 to 5 mol%, based on component (g1), of compound D having at least three groups capable of ester formation,
or
(f2) a mixture consisting essentially of polyetheresteramide P1 as claimed in claim 1 and 0.01-50% by weight, based on polyether-esteramide P1, of amino carboxylic acid B1 as claimed in claim 2,
or
(f3) a mixture consisting essentially of polyetheresteramides P1 which differ from one another in composition,
with 0.1-5% by weight, based on the amount of polyetheresteramides employed, of divinyl ether C1 and
with 0-5 mol%, based on the particular molar quantities of component (b1) employed to prepare the polyetheresteramides (f1) to (f3) employed, of compound D having at least three groups capable of ester formation.

5. A biodegradable thermoplastic molding composition T4 obtainable by mixing in a conventional way
(h1) 99.5-0.5% by weight polyetheresteramide Q1 as claimed in claim 1 with
(h2) 0.5-99.5% by weight hydroxycarboxylic acid H1 of the general formula Va or Vb
HO-[-C(O)-M-O-]ₓH Va 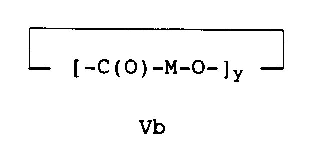
where x is an integer from 1 to 1500 and y is an integer from 1 to 4, and M is a radical which is selected from the group consisting of phenylene, -(CH₂)_{z}-, where z is an integer from 1 to 5, -C(R²)H- and -C(R²)HCH₂-where R² is methyl or ethyl.

6. A process for preparing the biodegradable polyetheresteramides Q1 as claimed in claim 1 in a conventional way, which comprises reacting a mixture of
(a1) from 95 to 99.9% by weight polyetheresteramide P1 as claimed in claim 1,
(a2) from 0.1 to 5% by weight divinyl ether C1 and
(a3) from 0 to 5 mol%, based on component (b1) from the preparation of P1, of compound D having at least three groups capable of ester formation.

7. A process for preparing the biodegradable polymers T1 as claimed in claim 2 in a conventional way, which comprises reacting polyetheresteramide Q2, as claimed in claim 2, with
(d1) 0.1-5% by weight, based on the polyetheresteramide Q2, of divinyl ether C1 and with
(d2) 0-5 mol%, based on component (b1) from the preparation of P1, as claimed in claim 1, and polyetheresteramide Q2, of compound D having at least three groups capable of ester formation.

8. A process for preparing the biodegradable polymers T2 as claimed in claim 3 in a conventional way, which comprises reacting polyetheresteramide Q1 as claimed in claim 1, with
(e1) 0.01-50% by weight, based on polyetheresteramide Q1, of amino carboxylic acid B1, as claimed in claim 2, and with
(e2) 0-5 mol%, based on component (b1) from the preparation of P1, as claimed in claim 1, and of polyetheresteramide Q1, of compound D having at least three groups capable of ester formation.

9. A process for preparing the biodegradable polymers T3 as claimed in claim 4 in a conventional way, which comprises reacting
(f1) polyetheresteramide P2, as claimed in claim 4, or
(f2) a mixture consisting essentially of polyetheresteramide P1, as claimed in claim 1, and 0.01-50% by weight, based on polyether-esteramide P1, of amino carboxylic acid B1, as claimed in claim 2, or
(f3) a mixture consisting essentially of polyetheresteramides P1 which differ from one another in composition,
with 0.1-5% by weight, based on the amount of polyetheresteramides employed, of divinyl ether C1 and
with 0-5 mol%, based on the particular molar quantities of component (b1) employed to prepare the polyetheresteramides (f1) to (f3) employed, of compound D having at least three groups capable of ester formation.

10. A process for preparing the biodegradable thermoplastic molding compositions T4 as claimed in claim 5 in a conventional way, which comprises mixing
99.5-0.5% by weight of polyetheresteramide Q1 as claimed in claim 1, with
0.5-99.5% by weight of hydroxy carboxylic acid H1, as claimed in claim 5.

11. The use of the biodegradable polymers as claimed in claims 1 to 4 or of the thermoplastic molding compositions as claimed in claim 5 or prepared as claimed in claims 6 to 10 for the production of compostable moldings.

12. The use of the biodegradable polymers as claimed in claims 1 to 4 or of the thermoplastic molding compositions as claimed in claim 5 or prepared as claimed in claims 6 to 10 for the production of adhesives.

13. A compostable molding obtainable by the use as claimed in claim 11.

14. An adhesive obtainable by the use as claimed in claim 12.

15. The use of the biodegradable polymers as claimed in claims 1 to 4 or of the thermoplastic molding compositions as claimed in claim 5 or prepared as claimed in claims 6 to 10 for the production of biodegradable blends essentially comprising the polymers according to the invention and starch.

16. A biodegradable blend obtainable by the use as claimed in claim 15.

17. A process for the production of biodegradable blends as claimed in claim 15 in a conventional way, which comprises mixing starch with the polymers according to the invention.

18. The use of the biodegradable polymers as claimed in claims 1 to 4 or of the thermoplastic molding compositions as claimed in claim 5 or prepared as claimed in claims 6 to 10 for the production of biodegradable foams.

19. A biodegradable foam obtainable by the use as claimed in claim 18.

## Revendications

1. Polyétheresteramides biologiquement dégradables Q1 d'un poids moléculaire (Mₙ) qui varie de 6000 à 80000 g/mole, d'un indice de viscosité qui varie de 30 à 450 g/ml (mesuré dans un mélange de o-dichlorobenzène et de phénol (rapport pondéral 50/50) à la concentration de 0,5% en poids de polyétheresteramide Q1 à la température de 25°C) et d'un point de fusion qui varie dans la plage de 50 à 200°C, que l'on peut obtenir par la réaction d'un mélange constitué
(a1) de 95 à 99,9% en poids d'un polyétheresteramide P1 d'un poids moléculaire (Mₙ) qui varie de 5000 à 80000 g/mole, d'un indice de viscosité de 30 à 450 g/ml (mesuré dans un mélange de o-dichlorobenzène et de phénol (rapport pondéral 50/50) à la concentration de 0,5% en poids de polyétheresteramide P1, à la température de 25°C) et d'un point de fusion qui varie de 50 à 200°C, que l'on peut obtenir par la réaction d'un mélange qui se compose essentiellement
(b1) d'un mélange, qui se compose essentiellement
(b11) de 20 à 95% molaires d'acide adipique ou de dérivés estérogènes de celui-ci ou de mélanges de ceux-ci,
(b12) de 50 à 80% molaires d'acide téréphtalique ou de dérivés estérogènes de celui-ci ou de leurs mélanges et
(b13) de 0 à 5% molaires d'un composé contenant des radicaux sulfonate, où 0 à 50% molaires du composant (b11) peuvent être remplacés par au moins un autre acide gras dimérique ou un acide dicarboxylique cycloaliphatique à C₅ à C₁₀ ou aliphatique en C₄ à C₁₀ et où 0 à 50% molaires du composant (b12) peuvent être remplacés par un autre acide dicarboxylique aromatique, la somme des indications en pourcentages molaires individuelles totalisant 100% molaires et
(b2) d'un mélange de composés dihydroxylés, formé
(b21) de 15 à 99,3% molaires d'un composé dihydroxylé, choisi dans le groupe formé par des alcanediols en C₂ à C₄ et des cycloalcanediols en C₅ à C₁₀,
(b22) de 0,2 à 85% molaires d'un composé dihydroxylé contenant des fonctions éther, répondant à la formule I
HO-[(CH₂)ₙ-O]ₘ-H I
dans laquelle n représente 2, 3 ou 4 et m représente un nombre entier qui varie de 2 à 250, ou de mélanges de ceux-ci,
(b23) de 0,5 à 80% molaires d'un aminoalcanol en C₂ à C₁₂, ou d'un aminocycloalcanol en C₅ à C₁₀ et
(b24) de 0 à 50% molaires d'un diaminoalcane en C₁ à C₈,
(b25) de 0 à 50% molaires d'une 2,2'-bisoxazoline de la formule générale II 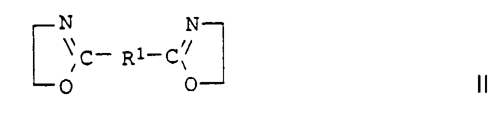 dans laquelle R¹ représente une simple liaison, un groupe (CH₂)_{q}-alkylène, où q = 2, 3 ou 4, ou un groupe phénylène, où la somme des indications en pourcentages molaires individuelles totalise 100% molaires,
où l'on choisit le rapport molaire de (b1) à (b2) dans la plage de 0,4:1 à 1,5:1,
(a2) de 0,1 à 5% en poids d'un éther divinylique C1 et
(a3) de 0 à 5% molaires, par rapport au composant (b1) provenant de la préparation de P1, d'un composé D avec au moins trois groupes estérogènes.

2. Polymères biologiquement dégradables T1 d'un poids moléculaire (Mₙ) qui varie de 8000 à 80000 g/mole, d'un indice de viscosité qui varie de 30 à 450 g/ml (mesuré dans un mélange de o-dichlorobenzène et de phénol (rapport pondéral 50/50) à la concentration de 0,5% en poids de polymère T1 et à la température de 25°C) et d'un point de fusion qui varie dans la plage de 50 à 255°C, que l'on peut obtenir par la réaction du polyétheresteramide Q2 avec un poids moléculaire (Mₙ) qui varie de 5000 à 80000 g/mole, d'un indice de viscosité qui varie de 30 à 450 g/ml (mesuré dans un mélange de o-dichlorobenzène et de phénol (rapport pondéral 50/50) à la concentration de 0,5% en poids de polyétheresteramide Q2 et à la température de 25°C) et d'un point de fusion qui varie dans la plage de 50 à 255°C, que l'on peut obtenir par la réaction d'un mélange essentiellement constitué
(c1) d'un polyétheresteramide P1, suivant la revendication 1,
(c2) de 0,01 à 50% en poids, par rapport à (c1), d'un acide aminocarboxylique B1,
où l'on choisit l'acide aminocarboxylique B1 dans le groupe formé par les aminoacides naturels, les polyamides possédant un poids moléculaire d'au maximum 18000 g/mole, que l'on peut obtenir par la polycondensation d'un acide dicarboxylique avec 4 à 6 atomes de carbone et d'une diamine comportant de 4 à 10 atomes de carbone et de composés qui sont définis par les formules IIIa et IIIb
HO-[-C(O)-G-N(H)-]ₚH IIIa 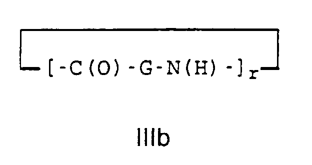
dans lesquelles p représente un nombre entier dont la valeur varie de 1 à 1500 et r représente un nombre entier dont la valeur varie de 1 à 4 et G représente un radical qui est choisi dans le groupe formé par les radicaux phénylène, -(CH₂)ₙ- où n représente un nombre entier dont la valeur varie de 1 à 12, -C(R²)H- et -C(R²)HCH₂- où R² représente le radical méthyle ou éthyle,
ainsi que des polyoxazolines avec l'unité récurrente IV 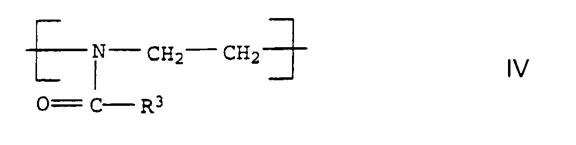 dans laquelle R³ représente u atome d'hydrogène, un radical alkyle en C₁ à C₆, un radical cycloalkyle en C₅ à C₈, un radical phényle non substitué ou substitué jusqu'à trois fois par des radicaux alkyle en C₁ à C₄, ou un radical tétrahydrofuryle
et
(c3) de 0 à 5% molaires, par rapport au composant (b1) provenant de la préparation de P1, d'un composé D avec au moins trois radicaux estérogènes,
avec (d1) de 0,1 à 5% en poids, par rapport au polyétheresteramide Q2, d'éther divinylique C1, ainsi que
avec (d2) de 0 à 5% molaires, par rapport au composant (b1) provenant de la préparation de polyétheresteramide Q2, en passant par le polyétheresteramide P1, d'un composé D.

3. Polymères biologiquement dégradables T2 d'un poids moléculaire (Mₙ) qui varie de 8000 à 80000 g/mole, d'un indice de viscosité qui varie de 30 à 450 g/ml (mesuré dans un mélange de o-dichlorobenzène et de phénol (rapport pondéral 50/50) à la concentration de 0,5% en poids de polymère T2 et à la température de 25°C) et d'un point de fusion qui varie de 50 à 255°C, que l'on peut obtenir par la réaction du polyétheresteramide Q1 suivant la revendication 1 avec
(e1) de 0,01 à 50% en poids, par rapport au polyétheresteramide Q1, d'un acide aminocarboxylique B1 suivant la revendication 2, ainsi qu'avec
(e2) de 0 à 5% molaires, par rapport au composant (b1) provenant de la préparation du polyétheresteramide Q1, en passant par le polyétheresteramide P1 suivant la revendication 1, d'un composé D avec au moins trois radicaux estérogènes.

4. Polymères biologiquement dégradables T3 d'un poids moléculaire (Mₙ) qui varie de 8000 à 80000 g/mole, d'un indice de viscosité qui varie de 30 à 450 g/ml (mesuré dans un mélange de o-dichlorobenzène et de phénol (rapport pondéral 50/50) à la concentration de 0,5% en poids de polymère T3 et à la température de 25°C) et d'un point de fusion qui fluctue de 50 à 255°C, que l'on peut obtenir par la réaction
(f1) d'un polyétheresteramide P2 d'un poids moléculaire (Mₙ) qui varie de 5000 à 80000 g/mole, d'un indice de viscosité qui varie de 30 à 450 g/ml (mesuré dans un mélange de o-dichlorobenzène et de phénol (rapport pondéral 50/50) à la concentration de 0,5% en poids de polyétheresteramide P2 et à la température de 25°C) et d'un point de fusion qui fluctue de 50 à 255°C,
que l'on peut obtenir par la réaction d'un mélange qui se compose essentiellement
(g1) d'un mélange qui se compose essentiellement
de 20 à 95% molaires d'acide adipique ou de dérivés estérogènes de celui-ci ou de leurs mélanges,
de 5 à 80% molaires d'acide téréphtalique ou de dérivés estérogènes de celui-ci ou de leurs mélanges et
de 0 à 5% molaires d'un composé contenant des radicaux sulfonate,
où la somme des indications en pourcentages molaires individuelles totalise 100% molaires,
(g2) d'un mélange (b2) suivant la revendication 1,
où le rapport molaire de (g1) à (g2) est choisi dans la plage de 0,4:1 à 1,5:1,
(g3) de 0,01 à 40% en poids, par rapport au composant (g1), d'un acide aminocarboxylique B1 suivant la revendication 2 et
(g4) de 0 à 5% molaires, par rapport au composant (g1), d'un composé D comportant au moins trois radicaux estérogènes,
ou
(f2) d'un mélange essentiellement constitué d'un polyétheresteramide P1 suivant la revendication 1 et de 0,01 à 50% en poids, par rapport au polyétheresteramide P1, d'un acide aminocarboxylique B1 suivant la revendication 2,
ou
(f3) d'un mélange essentiellement constitué de polyétheresteramides P1, qui présentent une composition mutuellement différente,
avec de 0,1 à 5% en poids, par rapport à la quantité des polyétheresteramides mis en oeuvre, d'éthers divinyliques C1, ainsi qu'avec de 0 à 5% molaires, par rapport aux quantités molaires concernées de composants (b1), qui furent mises en oeuvre pour la préparation des polyétheresteramides employés (f1) à (f3), d'un composé D comportant au moins trois radicaux estérogènes.

5. Masses à mouler thermoplastiques biologiquement dégradables T4, que l'on peut obtenir par le mélange d'une manière en soi connue,
(h1) de 99,5 à 0,5% en poids d'un polyétheresteramide Q1 suivant la revendication 1 avec
(h2) de 0,5 à 99,5% en poids d'un acide hydroxycarboxylique H1 des formules générales Va ou Vb
HO-[-C(O)-M-O-]ₓH Va 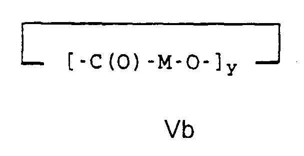
dans lesquelles x représente un nombre entier dont la valeur varie de 1 à 1500 et y représente un nombre entier dont la valeur varie de 1 à 4 et M représente un radical choisi dans le groupe constitué des radicaux phénylène, -(CH₂)_{z}- où z représente un nombre entier dont la valeur varie de 1 à 5, -C(R²)H- et C(R²)HCH₂-, où R² représente le radical méthyle ou éthyle.

6. Procédé de préparation des polyétheresteramides biologiquement dégradables Q1 suivant la revendication 1, de manière en soi connue, caractérisé en ce que l'on fait réagir un mélange constitué de
(a1) 95 à 99,9% en poids de polyétheresteramide P1 suivant la revendication 1,
(a2) 0,1 à 5% en poids d'éther divinylique C1 et
(a3) 0 à 5% molaires, par rapport au composant (b1) provenant de la préparation de P1, d'un composé D comportant au moins trois radicaux estérogènes.

7. Procédé de préparation des polymères biologiquement dégradables T1 suivant la revendication 2, d'une manière en soi connue, caractérisé en ce que l'on fait réagir un polyétheresteramide Q2 suivant la revendication 2, avec
(d1) de 0,1 à 5% en poids, par rapport au polyétheresteramide Q2, d'éther divinylique C1, ainsi qu'avec
(d2) de 0 à 5% molaires, par rapport au composant (b1) provenant de la préparation de P1, suivant la revendication 1, ainsi du polyétheresteramide Q2, d'un composé D avec au moins trois radicaux estérogènes.

8. Procédé de préparation des polymères biologiquement dégradables T2 suivant la revendication 3, d'une manière en soi connue, caractérisé en ce que l'on fait réagir un polyétheresteramide Q1, suivant la revendication 1, avec
(e1) de 0,01 à 50% en poids, par rapport au polyétheresteramide Q1, d'un acide aminocarboxylique B1, suivant la revendication 2, ainsi qu'avec
(e2) de 0 à 5% molaires, par rapport au composant (b1) provenant de la préparation de P1, suivant la revendication 1, ainsi que du polyétheresteramide Q1, d'un composé D comportant au moins trois radicaux estérogènes.

9. Procédé de préparation des polymères biologiquement dégradables T3 suivant la revendication 4, d'une manière en soi connue, caractérisé en ce que l'on fait réagir
(f1) un polyétheresteramide P2, suivant la revendication 4, ou
(f2) un mélange, essentiellement constitué de polyétheresteramide P1, suivant la revendication 1, et de 0,01 à 50% en poids, par rapport au polyétheresteramide P1, d'un acide aminocarboxylique B1, suivant la revendication 2 ou
(f3) un mélange, essentiellement constitué de polyétheresteramides P1, qui présentent une composition mutuellement différente,
avec de 0,1 à 5% en poids, par rapport à la quantité des polyétheresteramides mis en oeuvre, d'éthers divinyliques C1, ainsi qu'avec
de 0 à 5% molaires, par rapport aux quantités molaires concernées de composants (b1), qui furent mises en oeuvre pour la préparation des polyétheresteramides mis en oeuvre (f1) à (f3), d'un composé D comportant au moins trois radicaux estérogènes.

10. Procédé de préparation des masses à mouler thermoplastiques biologiquement dégradables T4 suivant la revendication 5, d'une manière en soi connue, caractérisé en ce que l'on mélange
de 99,5 à 0,5% en poids de polyétheresteramide Q1 suivant la revendication 1 et
de 0,5 à 99,5% en poids d'un acide hydroxycarboxylique H1, suivant la revendication 5.

11. Utilisation des polymères biologiquement dégradables suivant les revendications 1 à 4 ou des masses à mouler thermoplastiques suivant la revendication 5 ou préparées suivant les revendications 6 à 10, en vue de la fabrication d'articles moulés pouvant être transformés en compost.

12. Utilisation des polymères biologiquement dégradables suivant les revendications 1 à 4 ou des masses à mouler thermoplastiques suivant la revendication 5 ou préparées suivant les revendications 6 à 10, en vue de la fabrication de colles.

13. Articles moulés transformables en compost, que l'on peut obtenir par l'utilisation suivant la revendication 11.

14. Colles que l'on peut obtenir par l'utilisation suivant la revendication 12.

15. Utilisation des polymères biologiquement dégradables suivant les revendications 1 à 4 ou des masses à mouler thermoplastiques suivant la revendication 5 ou préparées suivant les revendications 6 à 10, en vue de la fabrication de mélanges biologiquement dégradables, contenant essentiellement les polymères conformes à la présente invention et de l'amidon.

16. Mélanges biologiquement dégradables, que l'on peut obtenir par l'utilisation suivant la revendication 15.

17. Procédé de préparation de mélanges biologiquement dégradables suivant la revendication 15, d'une manière en soi connue, caractérisé en ce que l'on mélange de l'amidon aux polymères conformes à la présente invention.

18. Utilisation des polymères biologiquement dégradables suivant les revendications 1 à 4 ou des masses à mouler thermoplastiques suivant la revendication 5 ou préparées suivant les revendications 6 à 10, en vue de la fabrication de mousses biologiquement dégradables.

19. Mousses biologiquement dégradables, que l'on peut obtenir par l'utilisation suivant la revendication 18.
